# EUROPEAN PATENT APPLICATION

(11) **EP 3 978 875 A1**
(43) Date of publication of application: **06.04.2022**
(21) Application number: 20813713.3
(22) Date of filing: 26.05.2020
(51) Int. Cl.: G01C 19/5607

(54) **ANGULAR VELOCITY SENSOR AND SENSOR ELEMENT**

(30) Priority: 31.05.2019 JP 2019102453; 26.02.2020 JP 2020030423
(71) Applicant: Kyocera Corporation, Kyoto-shi, Kyoto 612-8501 (JP)
(72) Inventor: SOEJIMA, Munetaka, Kyoto-shi, Kyoto 612-8501 (JP)
(74) Representative: TBK
(86) International application number: PCT/JP2020/020706
(87) International publication number: WO 2020/241629

(57) **Abstract**

A sensor element of an angular velocity sensor includes a piezoelectric body, a plurality of excitation electrodes, and a plurality of detection electrodes. The piezoelectric body includes at least two driving arms and a detection arm. The plurality of excitation electrodes excites the two driving arms in phases that are opposite to each other in an x-axis direction. The plurality of detection electrodes takes out a signal that is produced by vibration of the detection arm in the x-axis direction or a z-axis direction. The piezoelectric body further includes a frame portion, a retention portion that extends outward from the frame portion and that supports the frame portion, and a supporting portion that is connected to a side of the retention portion opposite to the frame portion. The two driving arms and the detection arm extend from the frame portion.

## Description

### Technical Field

The present disclosure relates to an angular velocity sensor that detects angular velocity and a sensor element that is included in the angular velocity sensor.

### Background Art

As angular velocity sensors (gyroscopes), so-called piezoelectric-vibration angular velocity sensors are known (for example, Patent Literature 1 to Patent Literature 3 below). In such sensors, an alternating-current voltage is applied to a piezoelectric body to excite the piezoelectric body. When the piezoelectric body that is being excited is rotated, a Coriolis force is produced in a direction orthogonal to an excitation direction with a magnitude that is in accordance with a rotation speed (angular velocity), and the piezoelectric body vibrates even due to this Coriolis force. Then, by detecting an electric signal produced in accordance with the deformation of the piezoelectric body caused by this Coriolis force, it is possible to detect the angular velocity of the piezoelectric body.

Patent Literature 1 and Patent Literature 2 propose a new vibration mode in a piezoelectric body of such sensors described above. Specifically, the piezoelectric body includes a base portion whose x-axis direction in an orthogonal coordinate system xyz is a length direction, two driving arms that extend in a y-axis direction in a row with respect to each other from the base portion at positions that are situated away from each other in the x-axis direction, and a detection arm that extends in the y-axis direction from the base portion at a position that is situated in the center between the two driving arms in the x-axis direction. The two driving arms are excited to bend toward sides opposite to each other in the x-axis direction. Therefore, the base portion vibrates to bend in the y-axis direction. Thus, the detection arm vibrates to be displaced in the y-axis direction. When the sensor is rotated around a z axis, the detection arm vibrates in the x-axis direction by a Coriolis force. When the sensor is rotated around the x axis, the detection arm vibrates in the z-axis direction by a Coriolis force.

In Figs. 4 to 8 of Patent Literature 3, a sensor having a vibration mode that is the same as the vibration mode in Patent Literature 1 is disclosed. A piezoelectric body of this sensor includes a frame portion. The frame portion includes a base portion at a part thereof, and surrounds two driving arms and a detection arm.

### Citation List

### Patent Literature

PTL 1: International Publication No. 2018/021166
PTL 2: International Publication No. 2018/021167
PTL 3: International Publication No. 2019/044697

### Summary of Invention

An angular velocity sensor according to an embodiment of the present disclosure includes a sensor element and a mounting base body that supports the sensor element. The sensor element includes a piezoelectric body, a plurality of excitation electrodes, and a plurality of detection electrodes. The piezoelectric body includes at least two driving arms and a detection arm, the at least two driving arms extending in a y-axis direction in a row with respect to each other at positions situated away from each other in an x-axis direction in an orthogonal coordinate system xyz, the detection arm extending in the y-axis direction. The plurality of excitation electrodes is positioned on the two driving arms in an arrangement and connection relationship in which the two driving arms are excited in phases that are opposite to each other in the x-axis direction. The plurality of detection electrodes is positioned on the detection arm in an arrangement in which a signal that is produced by vibration of the detection arm in the x-axis direction or a z-axis direction is taken out. The piezoelectric body further includes a frame portion, a retention portion, and a supporting portion. When viewed in the z-axis direction, the frame portion constitutes an opening. The frame portion comprises, as parts around the opening, a base portion whose x-axis direction is a length direction and an opposing portion that is positioned on a side opposite to the base portion with the opening in between. The retention portion extends toward an outside of the opening from the opposing portion and supports the frame portion. The supporting portion is connected to a side of the retention portion opposite to the opposing portion and is supported by the mounting base body. The two driving arms extend from portions of the opposing portion on two sides in the x-axis direction with respect to a position at which the opposing portion and the retention portion are connected to each other. The detection arm extends from the base portion.

An angular velocity sensor according to an embodiment of the present disclosure includes a sensor element and a mounting base body that supports the sensor element. The sensor element includes a piezoelectric body, a plurality of excitation electrodes, and a plurality of detection electrodes. The piezoelectric body includes at least two driving arms and a detection arm, the at least two driving arms extending in a y-axis direction in a row with respect to each other at positions situated away from each other in an x-axis direction in an orthogonal coordinate system xyz, the detection arm extending in the y-axis direction. The plurality of excitation electrodes is positioned on the two driving arms in an arrangement and connection relationship in which the two driving arms are excited in phases that are opposite to each other in the x-axis direction. The plurality of detection electrodes is positioned on the detection arm in an arrangement in which an electric charge is taken out when the detection arm vibrates in the x-axis direction or a z-axis direction. The piezoelectric body further includes a frame portion, a retention portion, and a supporting portion. When viewed in the z-axis direction, the frame portion constitutes an opening. The frame portion comprises, as parts around the opening, a base portion whose x-axis direction is a length direction and an opposing portion that is positioned on a side opposite to the base portion with the opening in between. The retention portion extends toward an outside of the opening from the opposing portion and supports the frame portion. The supporting portion is connected to a side of the retention portion opposite to the opposing portion and is supported by the mounting base body. The two driving arms extend from the base portion. The detection arm extends from the base portion at a position between the two driving arms.

A sensor element according to an embodiment of the present disclosure includes a piezoelectric body, a plurality of excitation electrodes, a plurality of detection electrodes, and a plurality of terminals. The piezoelectric body includes at least two driving arms and a detection arm, the at least two driving arms extending in a y-axis direction in a row with respect to each other at positions situated away from each other in an x-axis direction in an orthogonal coordinate system xyz, the detection arm extending in the y-axis direction from the base portion. The plurality of excitation electrodes is positioned on the two driving arms in an arrangement and connection relationship in which the two driving arms are excited in phases that are opposite to each other in the x-axis direction. The plurality of detection electrodes is positioned on the detection arm in an arrangement in which a signal that is produced by vibration of the detection arm in the x-axis direction or a z-axis direction is taken out. The plurality of terminals is connected to the excitation electrodes and the detection electrodes. The piezoelectric body further includes a frame portion, a retention portion, and a supporting portion. When viewed in the z-axis direction, the frame portion constitutes an opening. The frame portion comprises, as parts around the opening, a base portion whose x-axis direction is a length direction and an opposing portion that is positioned on a side opposite to the base portion with the opening in between. The retention portion extends toward an outside of the opening from the opposing portion and supports the frame portion. The supporting portion is connected to a side of the retention portion opposite to the opposing portion, and the plurality of terminals are positioned at the supporting portion. The two driving arms extend from portions of the opposing portion on two sides in the x-axis direction with respect to a position at which the opposing portion and the retention portion are connected to each other. The detection arm extends from the base portion.

A sensor element according to an embodiment of the present disclosure includes a piezoelectric body, a plurality of excitation electrodes, a plurality of detection electrodes, and a plurality of terminals. The piezoelectric body includes at least two driving arms and a detection arm, the at least two driving arms extending in a y-axis direction in a row with respect to each other at positions situated away from each other in an x-axis direction in an orthogonal coordinate system xyz, the detection arm extending in the y-axis direction. The plurality of excitation electrodes is positioned on the two driving arms in an arrangement and connection relationship in which the two driving arms are excited in phases that are opposite to each other in the x-axis direction. The plurality of detection electrodes is positioned on the detection arm in an arrangement in which an electric charge is taken out when the detection arm vibrates in the x-axis direction or a z-axis direction. The plurality of terminals is connected to the excitation electrodes and the detection electrodes. The piezoelectric body further includes a frame portion, a retention portion, and a supporting portion. When viewed in the z-axis direction, the frame portion constitutes an opening. The frame portion comprises, as parts around the opening, a base portion whose x-axis direction is a length direction and an opposing portion that is positioned on a side opposite to the base portion with the opening in between. The retention portion extends toward an outside of the opening from the opposing portion and supports the frame portion. The supporting portion is connected to a side of the retention portion opposite to the opposing portion, and the plurality of terminals are positioned at the supporting portion. The two driving arms extend from the base portion. The detection arm extends from the base portion at a position between the two driving arms.

### Brief Description of Drawings

[Fig. 1] Fig. 1 is a plan view showing an inside of an angular velocity sensor according to a first embodiment.
[Fig. 2] Fig. 2 is a sectional view along line II-II in Fig. 1.
[Fig. 3] Fig. 3 is a perspective view showing a structure of a sensor element that is included in the angular velocity sensor in Fig. 1.
[Fig. 4] Fig. 4(a) is a perspective view showing in enlarged form a part of the sensor element in Fig. 3, and Fig. 4(b) is a sectional view along line IVb-IVb in Fig. 4 (a) .
[Fig. 5] Fig. 5(a) and Fig. 5(b) are each a schematic view for illustrating vibrations with regard to excitations of the sensor element in Fig. 3.
[Fig. 6] Fig. 6(a) and Fig. 6(b) are each a schematic view for illustrating vibrations with regard to detection of the sensor element in Fig. 3.
[Fig. 7] Fig. 7(a) is a perspective view showing in enlarged form a part of a sensor element according to a second embodiment, and Fig. 7(b) is a sectional view along line VIIb-VIIb in Fig. 7(a).
[Fig. 8] Fig. 8(a) and Fig. 8(b) are each a schematic view for illustrating vibrations with regard to detection of the sensor element according to the second embodiment.
[Fig. 9] Fig. 9 is a perspective view showing a structure of a sensor element according to a third embodiment.
[Fig. 10] Fig. 10 is a plan view showing a structure of a sensor element according to a fourth embodiment.
[Fig. 11] Fig. 11 is a plan view showing a shape of a piezoelectric body according to a first modification.
[Fig. 12] Fig. 12(a), Fig. 12(b), Fig. 12(c), and Fig. 12(d) are each a plan view showing a shape of a part of a corresponding one of piezoelectric bodies according to a second modification to a fourth modification.
[Fig. 13] Fig. 13 is a plan view showing an inside of an angular velocity sensor according to a fifth embodiment.
[Fig. 14] Fig. 14(a) and Fig. 14(b) are each a schematic view for illustrating vibrations with regard to excitations of the angular velocity sensor in Fig. 13.
[Fig. 15] Fig. 15 is a plan view showing a shape of a piezoelectric body according to a modification of the fifth embodiment.

### Description of Embodiments

The contents of Patent Literature 1 to Patent Literature 3 may be incorporated by reference herein. In addition, the contents of International Publication No. 2018/139396, International Publication No. 2019/021860, International Publication No.2019/044696, and International Publication No. 2019/044697 according to the inventor of the present application may be incorporated by reference herein.

Embodiments according to the present disclosure are described below with reference to the drawings. The figures below are schematic figures. Therefore, the details may be omitted, and dimensional ratios and the like are not necessarily the same as the actual ratios. The dimensional ratios between those of a plurality of figures are not necessarily the same.

For the purpose of illustration, each figure is provided with an orthogonal coordinate system xyz. The orthogonal coordinate system xyz is defined based on the shape of a sensor element (piezoelectric body). That is, an x axis, a y axis, and a z axis do not necessary indicate an electrical axis of crystals, a machine axis, and an optical axis. Although the sensor element may be used with any one of the directions being an upward direction or a downward direction, hereunder, for convenience sake, with a positive side in a z-axis direction being an upward direction, terms, such as upper surface or lower surface, may be used. When a view is simply indicated as "plan view", unless otherwise particularly specified, this view is one that is seen in the z-axis direction.

The same or similar structures may be indicated with additional symbols, that is, different alphabets, such as "driving arm 13A" and "driving arm 13B". In this case, these may be simply called "driving arms 13" without being distinguished from each other.

From a second embodiment on, basically, differences from a previously described embodiment are described. Matters that are not particularly referred to may be considered the same as those of a previously described embodiment (or modification), or may be inferred from a previously described embodiment. Structures of a plurality of embodiments that correspond to each other (that are the same as or similar to each other) may be indicated by a common symbol even if their shapes and the like differ from each other.

### [First Embodiment]

### (Overall Structure of Angular Velocity Sensor)

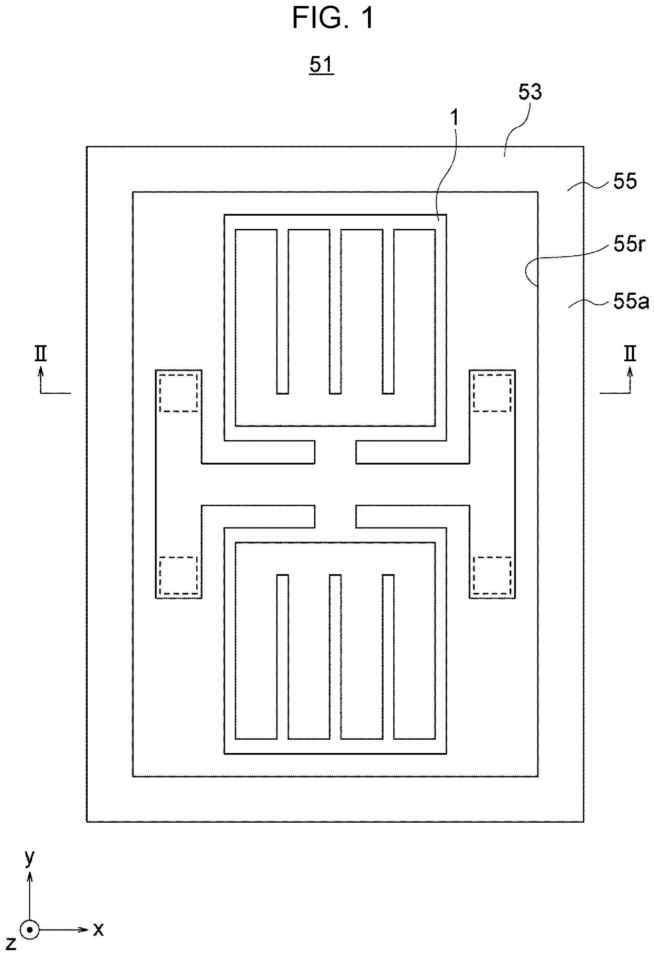

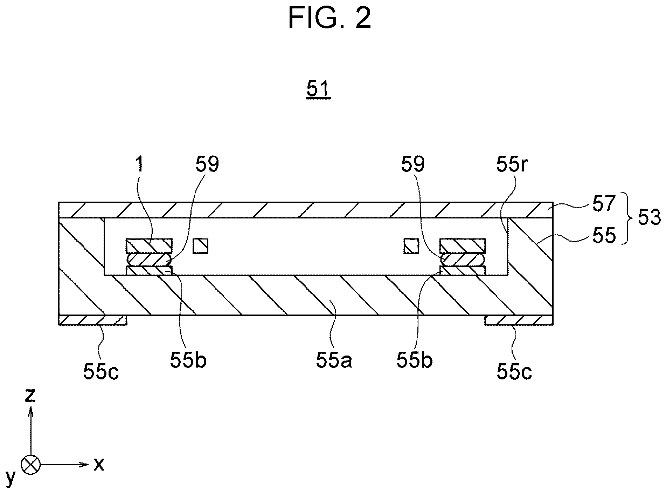

Fig. 1 is a plan view showing a schematic structure of an inside of an angular velocity sensor 51 ("angular velocity" may hereunder be omitted) according to an embodiment of the present disclosure. Fig. 2 is a sectional view along line II-II in Fig. 1.

In the embodiment, the sensor 51 is constituted to detect angular velocity around the z axis. The sensor 51 is, for example, as a whole and in general, an electronic component that is thin and has a parallelepiped shape. The dimensions thereof may be set as appropriate.

The sensor 51 includes, for example, a sensor element 1 that directly detects angular velocity and a package 53 in which the sensor element 1 is packaged. The package 53, for example, contributes to protecting the sensor element 1 and to acting as a link for electrical connection between the sensor element 1 and a circuit board (not shown) on which the sensor 51 is mounted.

Unlike in the illustrated example, the sensor 51 may include an electronic component other than the sensor element 1, such as an IC (Integrated Circuit).

### (Package)

The package 53 may have various structures, including publicly known structures. In the illustrated example, the package 53 includes a mounting base body 55 on which the sensor element 1 is mounted and a cover body 57 (Fig. 2) that is joined to the mounting base body 55 to seal the sensor element 1. The mounting base body 55 has, for example, a recess portion 55r that accommodates the sensor element 1. The cover body 57 covers the recess portion 55r.

The mounting base body 55 includes, for example, an insulating base body 55a having the recess portion 55r and a plurality of pads 55b (for example, four or more pads 55b) (Fig. 2) that are positioned on a bottom surface of the recess portion 55r. The sensor element 1 is disposed to face the bottom surface of the recess portion 55r, and is joined to the plurality of pads 55b through a plurality of conductive bumps 59 (Fig. 2). Therefore, the sensor element 1 is electrically connected and fixed to the mounting base body 55. A gap is formed between the sensor element 1 and the bottom surface of the recess portion 55r due to the thicknesses of the bumps 59 and the like, and, thus, the sensor element 1 is supported to be vibratable.

The mounting base body 55 includes a plurality of terminals 55c (for example, four or more terminals 55c) (Fig. 2) that are positioned on a lower surface of the insulating base body 55a. For example, by joining the plurality of terminals 55c to pads of a circuit board (not shown) through conductive bumps (not shown), the plurality of terminals 55c contributes to the mounting of the sensor 51. The plurality of terminals 55c is, for example, electrically connected to the plurality of pads 55b through a wire (not shown) of the mounting base body 55.

As described above, unlike in the illustrated example above, the sensor 51 may include an IC. In this case, for example, the sensor element 1 and the IC may be electrically connected to each other through the wire of the mounting base body 55, and the IC and the terminals 55c may be electrically connected to each other through the wire of the mounting base body 55.

### (Sensor Element)

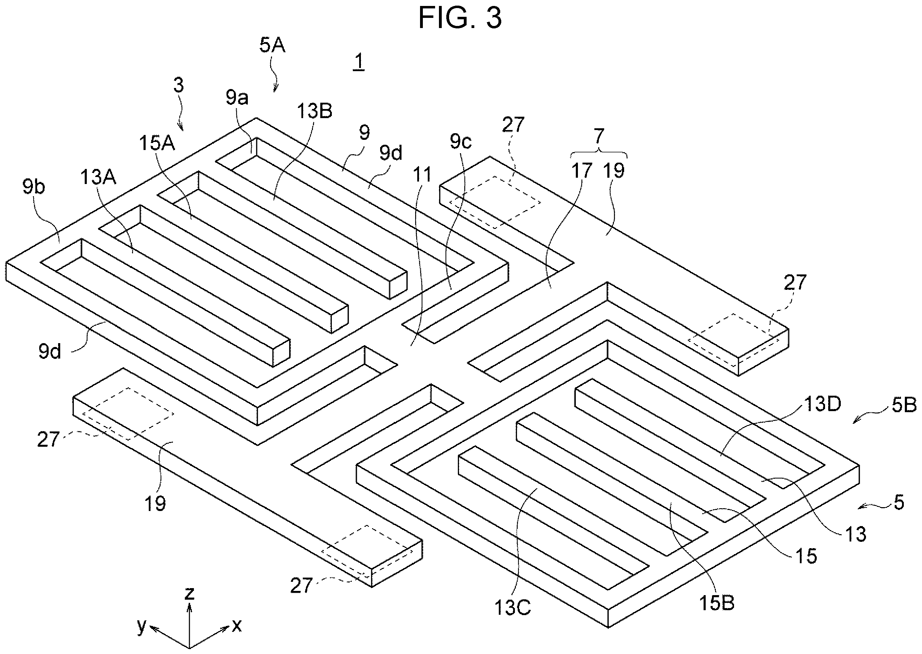

Fig. 3 is a perspective view showing a structure of the sensor element 1. However, in this figure, conductive layers that are provided on surfaces of the sensor element 1 are basically not illustrated.

The sensor element 1 includes a piezoelectric body 3. When, with the piezoelectric body 3 vibrating due to a voltage being applied to the piezoelectric body 3, the piezoelectric body 3 is rotated, vibration occurs in the piezoelectric body 3 due to a Coriolis force. By detecting an electric signal (for example, a voltage or an electric charge) produced by the vibration caused by this Coriolis force, angular velocity is detected. The details are as follows.

### (Overall Shape of Piezoelectric Body)

The piezoelectric body 3 is, for example, an integrated body as a whole. The piezoelectric body 3 may be a monocrystalline body or a polycrystalline body. The material of the piezoelectric body 3 may be selected as appropriate, and may be, for example, quartz (SiO₂), lithium tantalate (LiTaO₃), lithium niobate (LiNbO₃), lead zirconate titanate (PZT), or silicon (Si).

In the piezoelectric body 3, an electrical axis or a polarization axis (hereunder, only the polarization axis may be referred to as typifying both the electrical axis and the polarization axis) is set to coincide with the x axis. The polarization axis may be tilted with respect to the x axis by a predetermined range (for example, within 15 degrees). When the piezoelectric body 3 is a monocrystalline body, a machine axis and an optical axis may extend in directions selected as appropriate. For example, the machine axis extends in the y-axis direction, and the optical axis extends in the z-axis direction.

The piezoelectric body 3 has, for example, an overall thickness (the z-axis direction) that is constant. The piezoelectric body 3 has, for example, in general, a shape that is line-symmetrical with respect to a symmetry axis (not shown) that is parallel to the y axis. In addition, the piezoelectric body 3 has, for example, in general, a shape that is line-symmetrical with respect to a symmetry axis (not shown) that is parallel to the x axis. However, for example, a shape resulting from the anisotropy of the piezoelectric body 3 with respect to etching is not necessarily line-symmetrical in terms of details due to, for example, the existence of uneven portions for reducing the probability of short circuits of wires.

The piezoelectric body 3 includes two units 5 (5A and 5B) that are line-symmetrically disposed on both sides of the symmetry axis (not shown) that is parallel to the x axis, and a supporting portion 7 that supports the two units 5. Unlike in the illustrated example, the unit 5 may be considered as one unit (the shape of the piezoelectric body does not need to be line-symmetrical with respect to the symmetry axis that is parallel to the x axis). In the illustrated example, since the piezoelectric body 3 includes two units 5, for example, it is possible to increase detection sensitivity by adding detection signals produced by both units 5.

Each unit 5 includes, for example, a frame portion 9 that constitutes an opening 9a and a retention portion 11 that extends outward from the frame portion 9. Each unit 5 includes driving arms 13 (13A and 13B or 13C and 13D) and a detection arm 15 (15A or 15B) that extend inward from the frame portion 9. The supporting portion 7 includes, for example, a connection portion 17 that is connected to sides of the retention portions 11 opposite to the frame portions 9, and two mounting portions 19 that support two ends of the connection portion 17.

The driving arms 13 are portions that are excited by application of a voltage (an electric field) thereto. The detection arms 15 are portions that vibrate by a Coriolis force and produce electric signals that are in accordance with angular velocity. Each frame portion 9 is a portion that contributes to supporting the driving arms 13 and the detection arm 15 and to transmitting the vibration to the detection arm 15 from the driving arms 13. Each retention portion 11 is a portion that contributes to supporting the frame portion 9. The supporting portion 7 is a portion that contributes to supporting the retention portions 11 and to mounting the sensor element 1 on the mounting base body 55.

Each frame portion 9 includes, for example, a base portion 9b and an opposing portion 9c that oppose each other with the opening 9a in between, and two side portions 9d, each connecting an end of the base portion 9b and an end of the opposing portion 9c at one side or at the other side. The base portion 9b and (at least) two driving arms 13 and the detection arm 15 are portions that directly detect angular velocity. Regarding the structures of these portions and electrodes (described below) that are provided at these portions, the contents of Patent Literature 1 and the like may be incorporated by reference herein, and, in the embodiment, the details thereof may not be described. Portions (9c and 9d) of each frame portion 9 other than the base portion 9b are portions that support two ends of the base portion 9b.

### (Base Portions, Driving Arms, and Detection Arms)

Each base portion 9b is, for example, a long base portion whose x-axis direction is a longitudinal direction as a whole, and connects the two side portions 9d. In other words, the two ends of each base portion 9b are supported portions that are supported by the two side portions 9d. In plan view, each base portion 9b can be flexed like a beam whose two ends are supported.

In the illustrated example, each base portion 9b has a shape in which its entirety extends in a straight line in the x-axis direction. However, each base portion 9b may have other shapes. For example, each base portion 9b may have bent portions at the two ends. In this case, since, for example, the entire length of each base portion 9b becomes long, each base portion 9b is easily flexed. The shape of a cross section (yz section) of each base portion 9b may also be set as appropriate, and is a rectangular shape in the illustrated example. The shape and the dimensions of the cross section of each base portion 9b may be constant (illustrated example) or may not be constant in a length direction of each base portion 9b.

Various dimensions of each base portion 9b may be set as appropriate. For example, the width (y-axis direction) and the thickness (z-axis direction) of each base portion 9b may be such that one of the width and the thickness is larger than the other of the width and the thickness. For example, since each base portion 9b is expected to flex in plan view, the width of each base portion 9b may be relatively small. For example, the width of each base portion 9b may be smaller than the width (x-axis direction) of each retention portion 11. For example, the length and the width of each base portion 9b may be adjusted to cause the natural frequency of flexing in plan view to approach the natural frequency of the driving arms 13 (in a direction of excitation by application of a voltage) and/or the natural frequency of the detection arm 15 (in a direction of vibration caused by a Coriolis force).

Each driving arm 13 extends in the y-axis direction from the base portion 9b, and an end thereof is a free end. Therefore, each driving arm 13 is capable of flexing like a cantilever. The two driving arms (13A and 13B, or 13C and 13D) of each unit 5 extend in a row (for example, in parallel) with respect to each other at positions that are situated away from each other in the x-axis direction. For example, the two driving arms 13 pass the center of the corresponding base portion 9b, and are provided line-symmetrically with respect to the symmetry axis (not shown) (refer to the detection arm 15) parallel to the y axis.

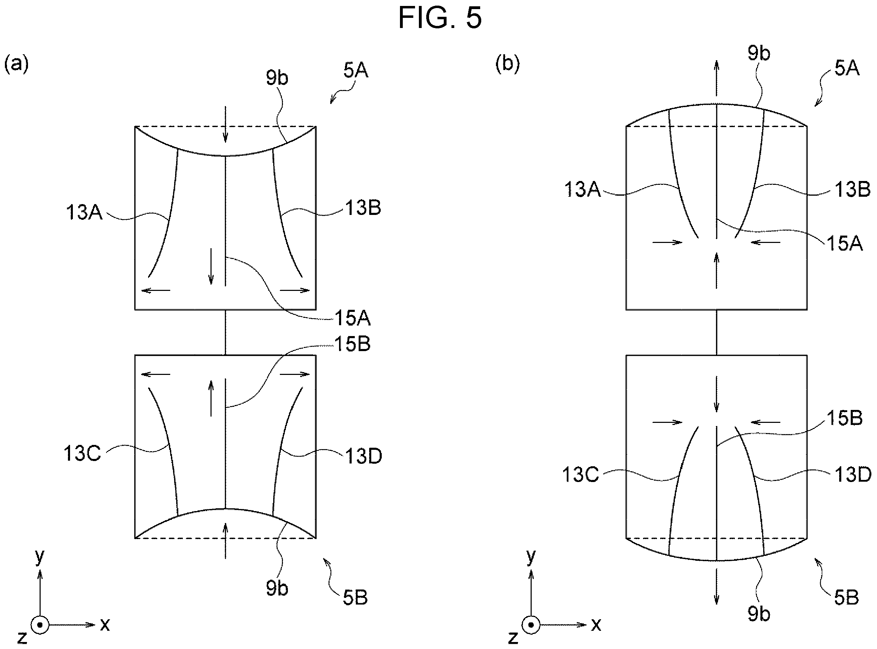

As described below (Fig. 5(a) and Fig. 5(b)), the two driving arms 13 of each pair are intended to be excited in the x-axis direction to flex (vibrate) the corresponding base portion 9b in plan view. Therefore, for example, the positions in the x-axis direction of the two driving arms 13 of each pair with respect to the corresponding base portion 9b may be set as appropriate to increase the flexing of the corresponding base portion 9b by vibrating the two driving arms 13. For example, when the length of each base portion 9b in the x-axis direction is divided into three equal parts, the two driving arms 13 are positioned in a corresponding one of the regions on two sides.

The specific shape and the like of each driving arm 13 may be set as appropriate. For example, each driving arm 13 has a long parallelepiped shape. That is, the shape of each cross section (xz section) is a rectangular shape. Although not particularly illustrated, each driving arm 13 may have a hammer shape whose width (x-axis direction) increases at end portions thereof. The two driving arms 13 of each unit 5 are, for example, in general, line-symmetrical in terms of shape and size. Therefore, the vibration characteristics of the two driving arms 13 are equivalent to each other. However, for example, when the shape of each cross section is adjusted for reducing unnecessary vibrations (for example, when a rectangular cut is provided), the shape of the two driving arms 13 may no longer be strictly line-symmetrical.

As described below, each driving arm 13 is excited in the x-axis direction. Therefore, when the width (x-axis direction) of each driving arm 13 is increased, the natural frequency in the excitation direction (x-axis direction) is increased. In addition, when the length (from a different viewpoint, the mass) of each driving arm 13 is increased, the natural frequency in the excitation direction is decreased. Various dimensions of each driving arm 13 may be set to, for example, cause the natural frequency of each driving arm 13 in the excitation direction to approach an intended frequency.

Each detection arm 15 extends in the y-axis direction from the base portion 9b, and an end thereof is a free end. Therefore, each detection arm 15 is capable of flexing like a cantilever. In addition, each detection arm 15 extends beside (for example, in parallel with) the two driving arms 13 at a position between the two driving arms 13. For example, each detection arm 15 is positioned at the center of the base portion 9b in the x-axis direction, and/or is positioned in the center between the two driving arms 13.

The specific shape and the like of each detection arm 15 may be set as appropriate. For example, each detection arm 15 has a long parallelepiped shape. That is, the shape of each cross section (xz section) is a rectangular shape. Each detection arm 15 may have a hammer shape whose width (x-axis direction) increases at end portions thereof.

As described below, in the present embodiment, each detection arm 15 vibrates in the x-axis direction due to a Coriolis force. Therefore, when the width (x-axis direction) of each detection arm 15 is increased, the natural frequency in the vibration direction (x-axis direction) is increased. In addition, when the length (from a different point of view, the mass) of each detection arm 15 is increased, the natural frequency in the vibration direction is decreased. Various dimensions of each detection arm 15 may be set to, for example, cause the natural frequency of each detection arm 15 in the vibration direction to approach the natural frequency of the driving arms 13 in the excitation direction. The length of each detection arm 15 is, for example, equal to the length of the driving arms 13. However, the lengths may differ from each other.

### (Frame Portions)

As long as each frame portion 9 includes the base portion 9b as a part around the opening 9a, the shape and the dimensions of each frame portion 9 may be set as appropriate. In the illustrated example, in plan view (when viewed in the z-axis direction), each frame portion 9 (from a different viewpoint, each opening 9a) has a rectangular shape, and the four sides of each frame portion 9 constitute the base portion 9b, the opposing portions 9c, and the two side portions 9d. Each frame portion 9 may have a quadrilateral shape other than a rectangular shape (such as a trapezoidal shape), a polygonal shape other than a quadrilateral shape (such as a triangular shape, a pentagonal shape, or a hexagonal shape), or a shape having a curved portion. When each frame portion 9 has the triangular shape above, for example, one side is constituted by the base portion 9b and one corner is constituted by the opposing portion 9c. As can be understood from the description above, the base portion 9b, the opposing portion 9c, and the side portions 9d do not necessarily need to be clearly distinguishable from each other. Although depending upon the definition of an end portion of the opposing portion 9c, unlike the base portion 9b, the opposing portion 9c may not have a length in the x-axis direction.

In each frame portion 9 (from a different viewpoint, each opening 9a), either one of the diameter in the x-axis direction and the diameter in the y-axis direction may be larger than the other of the diameter in the x-axis direction and the diameter in the y-axis direction. These dimensions may, for example, after setting the shapes and the dimensions of the driving arms 13 and the detection arms 15 in accordance with a desired frequency or the like, be set to magnitudes that do not allow the driving arms 13 and the detection arms 15 to be brought into contact with a corresponding one of the frame portions 9 (portions other than the corresponding base portion 9b) due to vibration for detecting angular velocity. The dimensions of each frame portion 9 may be set to bring or not to bring the driving arms 13 or the detection arm 15 into contact with the corresponding frame portion 9 (the portions other than the corresponding base portion 9b) when a shock having a small relationship with an operation in which the detection of angular velocity is intended is applied to the sensor 51.

The shape and the dimensions of each portion (9c and 9d) of each frame portion 9 other than the base portion 9b may also be set as appropriate. In the illustrated example, the shape of each portion is a long parallelepiped shape. That is, the shape of a cross section (yz section) of each opposing portion 9c and the shape of a cross section (xz section) of each side portion 9d are rectangular shapes. The shapes and the dimensions of the cross sections above of the opposing portions 9c and the side portions 9d in a length direction are constant. Unlike in the illustrated example, each base portion 9b may be made easily flexible by forming parts of the side portions 9d to have narrow-width portions. The width (y-axis direction) of each opposing portion 9c and the width (x-axis direction) of each side portion 9d may be the same as (illustrated example) or may differ from the width (y-axis direction) of the corresponding base portion 9b. The width of each opposing portion 9c and the width of each side portion 9d may be smaller than (illustrated example) or larger than or equal to the width (x-axis direction) of the corresponding retention portion 11.

### (Retention Portions)

Each frame portion 9 is supported by only the retention portion 11. That is, each frame portion 9 is supported by the supporting portion 7 at one point by the retention portion 11. Each retention portion 11 may be connected to any position on a portion of the frame portion 9 other than the base portion 9b, and, for example, may be connected to the opposing portion 9c, more specifically, at a central position on the opposing portion 9c in the x-axis direction.

Specific shapes and dimensions of each retention portion 11 may be set as appropriate. In the illustrated example, each retention portion 11 extends (protrudes) in a straight line in the y-axis direction, and has a parallelepiped shape. For example, as long as the retention portions 11 are capable of supporting the frame portions 9 and the arms (13 and 15) extending from the corresponding frame portion 9, the dimensions of each retention portion 11 may be set as appropriate. For example, the width (x-axis direction) of each retention portion 11 is smaller than the length (x-axis direction) of the base portion 9b, the length (x-axis direction) of the opposing portion 9c, and/or the maximum diameter of the frame portion 9 in the x-axis direction. For example, the width of each retention portion 11 may be 1/3 or less, 1/4 or less, or 1/5 or less of the length of the base portion 9b, the length of the opposing portion 9c, and/or the maximum diameter of the frame portion 9 in the x-axis direction. In each retention portion 11, the width (x-axis direction) may be smaller than, equal to, or larger than (illustrated example) the length (y-axis direction).

### (Supporting portion)

The supporting portion 7 may have any shape and dimensions. The illustrated example is only one example. As already described, in the illustrated example, the supporting portion 7 includes the connection portion 17 and the two mounting portions 19. From a different viewpoint, the supporting portion 7 has a roughly H shape. Alternatively, for example, in place of the two mounting portions 19, a frame-like mounting portion 19 that surrounds the two units 5 and the connection portion 17 may be provided.

Specific shapes and dimensions of the connection portion 17 may be set as appropriate. In the illustrated example, the connection portion 17 has a long shape extending in a straight line in the x-axis direction, and has a parallelepiped shape. As long as the connection portion 17 is capable of supporting a predetermined number of units 5 (here, two units 5), the dimensions of the connection portion 17 may be set as appropriate. For example, the length (x-axis direction) of the connection portion 17 is longer than the outside diameter of each frame portion 9 in the x-axis direction, as a result of which it is possible to position the two mounting portions 19 on two side in the x-axis direction with respect to each frame portion 9. The width (y-axis direction) of the connection portion 17 is, for example, larger than the width of each frame portion 9 and the width of the various arms (13 and 15). The width of the connection portion 17 may be smaller than, equal to (illustrated example), or larger than the width of each retention portion 11.

Specific shapes and dimensions of the two mounting portions 19 may be set as appropriate. In the illustrated example, each mounting portion 19 has a long shape extending in a straight line in the y-axis direction, and has a parallelepiped shape. For example, as long as the mounting portions 19 are capable of supporting the connection portion 17 and a predetermined number of units 5 (here, two units 5), the dimensions of the mounting portions 19 may be set as appropriate. The length (y-axis direction) of each mounting portion 19 may be larger than or equal to a length that allows end portions of each mounting portion 19 to be within a range in which the end portions are closer to the connection portion 17 than the base portions 9b. The width (x-axis direction) of each mounting portion 19 may be greater than (illustrated example), or less than or equal to the width (y-axis direction) of the connection portion 17.

### (Conductors of Sensor Element)

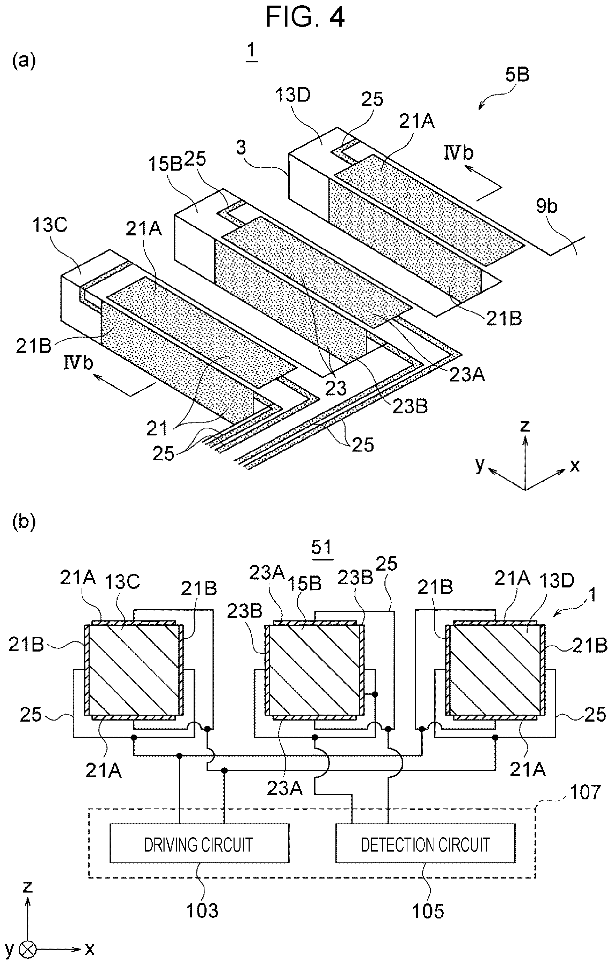

Fig. 4(a) is a perspective view showing in enlarged form a part of the sensor element 1. More specifically, a part of the unit 5B is shown. Fig. 4(b) is a sectional view along line IVb-IVb in Fig. 4(a). Here, although the unit 5B is illustrated and described, the same applies to the unit 5A except that the signs of the y axis are opposite to each other.

The sensor element 1 has conductors that are positioned on the piezoelectric body 3. The conductors are, for example, excitation electrodes 21 (21A and 21B) for applying a voltage to the driving arms 13, detection electrodes 23 (23A and 23B) for taking out a signal produced by the detection arm 15, terminals 27 (Fig. 3) for mounting the sensor element 1 on the mounting base body 55, and wires 25 for connecting the electrodes and the terminals. In addition, the conductors may have a pattern to which a reference potential is applied to function as a shield. The various conductors above are constituted by, for example, conductor layers on surfaces of the piezoelectric body 3. The material of each conductor layer may be, for example, a metal, such as Cu or Al.

Additional symbols A and B for the excitation electrodes 21 and the detection electrode 23 are added based on the orthogonal coordinate system xyz. Therefore, as described above, the excitation electrodes 21A of one driving arm 13 and the excitation electrodes 21A of the other driving arm 13 do not necessarily have the same electric potential. This also applies to the excitation electrodes 21B. In a mode in which a plurality of detection arms 15 are provided as in the present embodiment, the same applies to the detection electrodes 23A and 23B.

### (Excitation Electrodes)

In each driving arm 13, the excitation electrodes 21A are provided on a corresponding one of an upper surface and a lower surface (the upper and lower surfaces being two surfaces facing a corresponding one of two sides in the z-axis direction). In each driving arm 13, the excitation electrodes 21B are provided on a corresponding one of side surfaces (the side surfaces being two surfaces facing a corresponding one of two sides in the x-axis direction). Even in each of the units 5A and 5B (even when the driving arms 13 are those that extend either toward a +y side or a - y side), the additional symbol A for the excitation electrodes 21 corresponds to the upper surface and the lower surface, and the additional symbol B for the excitation electrodes 21 corresponds to the side surfaces.

For example, each excitation electrode 21 covers a large portion of the upper surface, the lower surface, a left surface, or a right surface of the corresponding driving arm 13. However, in order to prevent the excitation electrodes 21A and 21B from being short-circuited, at least the excitation electrodes 21A or the excitation electrodes 21B (in the present embodiment, the excitation electrodes 21A) are formed smaller in a width direction than the surfaces. A part of a base and a part of an end of each driving arm 13 may be positions where the excitation electrodes 21 are not disposed.

In each driving arm 13, the two excitation electrodes 21A have the same electric potential. In addition, in each driving arm 13, the two excitation electrodes 21B have the same electric potential. The excitation electrodes 21 whose electric potentials are the same are connected to each other by, for example, the wires 25.

When a voltage is applied between the excitation electrodes 21A and the excitation electrodes 21B, for example, in each driving arm 13, an electric field that is directed toward the two side surfaces (two sides in the x-axis direction) from the upper surface and an electric field that is directed toward the two side surfaces from the lower surface are produced. On the other hand, the polarization axis coincides with the x-axis direction. Therefore, focusing on the components of the electric fields in the x-axis direction, at one portion of each driving arm 13 on one side in the x-axis direction, the direction of the electric field and the direction of the polarization axis are the same, whereas, at the other portion of each driving arm 13 on the other side in the x-axis direction, the direction of the electric field and the direction of the polarization axis are opposite to each other.

As a result, the one portion of each driving arm 13 on the one side in the x-axis direction contracts in the y-axis direction, and the other portion of each driving arm 13 on the other side in the x-axis direction expands in the y-axis direction. Each driving arm 13 is bent toward the one side in the x-axis direction like a bimetal. When the voltages that are applied to the excitation electrodes 21A and to the excitation electrodes 21B are reversed in polarity, the driving arms 13 bend in the opposite direction. Due to such a principle, when alternating-current voltages are applied to the excitation electrodes 21A and 21B, the driving arms 13 vibrate in the x-axis direction.

Although not particularly illustrated, one or more recessed grooves extending in a longitudinal direction of the corresponding driving arm 13 (the recessed grooves may include a plurality of recessed portions that are disposed in the longitudinal direction of the corresponding driving arm 13) may be formed in the upper surface and/or the lower surface of the corresponding driving arm 13, and the excitation electrodes 21A may be provided to extend in the recessed grooves. In this case, the excitation electrodes 21A and the excitation electrodes 21B oppose each other in the x-axis direction with wall portions of the respective recessed grooves in between, and the excitation efficiency is increased.

In the two driving arms 13 of each unit 5, the excitation electrodes 21A of one of the driving arms 13 and the excitation electrodes 21B of the other driving arm 13 have the same electric potential. The excitation electrodes 21 whose electric potentials are the same are connected to each other by, for example, the wires 25.

In such a connection relationship, when an alternating-current voltage is applied between the excitation electrodes 21A and the excitation electrodes 21B, voltages having phases opposite to each other are applied to the two driving arms 13. As a result, the two driving arms 13 vibrate to flex in directions opposite to each other in the x-axis direction.

Focusing on the two units 5, for example, at two driving arms 13 (two driving arms 13A and 13C or two driving arms 13B and 13D) that are positioned on the same side in the x-axis direction with respect to the detection arms 15 (15A and 15B), the excitation electrodes 21A have the same electric potential, and the excitation electrodes 21B have the same electric potential. The excitation electrodes 21 whose electric potentials are the same are connected to each other by, for example, the wires 25.

In such a connection relationship, when an alternating-current voltage is applied between the excitation electrodes 21A and the excitation electrodes 21B, voltages having the same phase are applied to the two driving arms 13 that are positioned on the same side in the x-axis direction. As a result, the two driving arms 13 vibrate to flex in the same direction in the x-axis direction.

Unlike in the present embodiment, at the two driving arms 13 that are positioned on the same side in the x-axis direction with respect to the detection arms 15 (15A and 15B), the excitation electrodes 21A and the excitation electrodes 21B may have the same electric potential.

### (Detection Electrodes)

In the present embodiment, the detection electrodes 23 have a structure that is the same as the structure of the excitation electrodes 21. That is, in each detection arm 15, the detection electrodes 23A are provided on a corresponding one of an upper surface and a lower surface (the upper and lower surfaces being two surfaces facing a corresponding one of two sides in the z-axis direction). In each detection arm 15, the detection electrodes 23B are provided on a corresponding one of side surfaces (the side surfaces being two surfaces facing a corresponding one of two sides in the x-axis direction). The two detection electrodes 23A are connected to each other, and the two detection electrodes 23B are connected to each other. The detection electrodes are connected by, for example, the wires 25.

Similarly to the excitation electrodes 21, regardless of whether each detection arm 15 extends either toward the +y side or the -y side, the additional symbol A corresponds to the upper surface and the lower surface, and the additional symbol B corresponds to the side surfaces. The description about the breadths and positions of arrangement of the excitation electrodes 21 in each driving arm 13 above may be cited in describing the breadths and the positions of arrangement of the detection electrodes 23 in each detection arm 15. Even in each detection arm 15, recessed grooves may be formed in the upper surface and/or the lower surface.

When the detection arms 15 flex in the x-axis direction, based on a principle that is the reverse of the principle of excitation of the driving arms 13, a voltage is produced between the detection electrodes 23A and the detection electrodes 23B. In other words, the detection electrodes 23A and 17B take out electric charges (from a different viewpoint, electric potentials or signals) whose signs (polarities) differ from each other from a corresponding one of the detection arms 15. When the detection arms 15 vibrate in the x-axis direction, the voltage that is applied to the detection electrodes 23 is detected as an alternating-current voltage.

At the two units 5 (the two detection arms 15), the detection electrodes 23A and the detection electrodes 23B are connected to each other. The detection electrodes 23A and the detection electrodes 23B are connected by, for example, the wires 25. In such a connection relationship, when the two detection arms 15 flex toward sides opposite to each other in the x-axis direction, the signals that are taken out by both detection arms 15 are added.

As described above, unlike in the present embodiment, regarding the two units 5, at the two driving arms 13 (13A and 13C or 13B and 13D) that are positioned on the same side in the x-axis direction, the excitation electrodes 21A and the excitation electrodes 21B may have the same electric potential. In this case, at the two units 5 (the two detection arms 15), the detection electrodes 23A are connected to each other and the detection electrodes 23B are connected to each other.

### (Terminals)

For example, at least four terminals 27 (Fig. 3) are provided, two terminals 27 each being positioned on the lower surface of a corresponding one of the two mounting portions 19. The terminals 27 oppose the pads 55b of the mounting base body 55 shown in Fig. 2, and are joined to the pads 55b by the bumps 59. Therefore, as already described above, the sensor element 1 and the mounting base body 55 are electrically connected to each other, and the sensor element 1 (the piezoelectric body 3) is supported with the driving arms 13 and the detection arms 15 in a vibratable state. The four terminals 27 are each provided on, for example, a corresponding one of two ends of a corresponding one of the mounting portions 19.

### (Wires)

As can be understood from the description about the excitation electrodes 21 above, the plurality of wires 25 includes those that connect the plurality of excitation electrodes 21 to each other. As can be understood from the description about the detection electrodes 23 above, the plurality of wires 25 includes those that connect the plurality of detection electrodes 23 to each other. Due to the connections using the plurality of wires 25, the plurality of excitation electrodes 21 is divided into two sets having electric potentials that differ from each other, and the plurality of detection electrodes 23 is divided into two sets having electric potentials that differ from each other. The plurality of wires 25 includes those that individually connect the four sets of electrodes and the four terminals 27.

By disposing as appropriate the plurality of wires 25 at the upper surface, the lower surface, and/or the side surfaces of the various portions (7, 9, 13, and 15) of the piezoelectric body 3, the entire wires 25 being provided on the surfaces of the piezoelectric body 3 can realize the above-described connections without being short-circuited. However, insulating layers may be superimposed upon some of the wires 25 that are positioned on the piezoelectric body 3 and the other wires 25 may be provided on the insulating layers to form a three-dimensional wire portion.

### (Driving Circuit and Detection Circuit)

As shown in Fig. 4(b), the sensor element 1 is electrically connected to a driving circuit 103 and a detection circuit 105. The driving circuit 103 is for exciting the sensor element 1. The detection circuit 105 is for detecting a signal that is in accordance with angular velocity from the sensor element 1.

The driving circuit 103 is constituted to include, for example, an oscillation circuit and an amplifier, and an alternating-current voltage having a predetermined frequency is applied to a position between the excitation electrodes 21A and the excitation electrodes 21B through two terminals 27. The frequency may be predetermined in the angular velocity sensor 51, or may be determined from, for example, an external device.

The detection circuit 105 is constituted to include, for example, an amplifier and a detector circuit, and detects the potential difference between the detection electrodes 23A and the detection electrodes 23B through two terminals 27 and outputs an electric signal that is in accordance with the detection result to, for example, an external device. More specifically, for example, the potential difference above as an alternating-current voltage and the detection circuit 105 detects outputs a signal that is in accordance with the amplitude of the detected alternating-current voltage. The angular velocity is determined based on the amplitude. In addition, the detection circuit 105 outputs a signal that is in accordance with a phase difference between the applied voltage of the driving circuit 103 and the detected electric signal. The direction of rotation is determined based on the phase difference.

The driving circuit 103 and the detection circuit 105 constitute a control circuit 107 as a whole. The control circuit 107 is constituted by, for example, a chip IC (Integrated Circuit). As already described, the angular velocity sensor 51 may include, in addition to the sensor element 1, an electronic component mounted on the mounting base body 55. The control circuit 107 may be constituted by, for example, an electronic component mounted on the mounting base body 55 or an electronic component mounted on a circuit board on which the angular velocity sensor 51 is mounted. In addition to the sensor element 1, a structure including the driving circuit 103 and the detection circuit 105 may be defined as an angular velocity sensor.

### (Operation of Angular Velocity Sensor)

Fig. 5(a) and Fig. 5(b) are each a schematic plan view for illustrating excitations of the piezoelectric body 3.

In both of these figures, alternating-current voltages that are applied to the excitation electrodes 21 are out of phase by 180 degrees.

As described above, in each unit 5, by applying alternating-current voltages to the excitation electrodes 21, the two driving arms 13 (13A and 13B or 13C and 13D) are excited in phases opposite to each other to be deformed in directions opposite to each other in the x-axis direction.

At this time, as shown in Fig. 5(a), when the two driving arms 13 of each pair flex outward (away from each other) in the x-axis direction, a bending moment thereof is transmitted to the corresponding base portion 9b, and the corresponding base portion 9b flexes toward one side in the y-axis direction. The one side in the y-axis direction is specifically a direction toward an end from a base of the driving arms 13, and, in the unit 5A, is a -y side, and, in the unit 5B, is a +y axis. As a result of each base portion 9b being flexed toward the one side in the y-axis direction, the corresponding detection arm 15 is displaced toward the one side in the y-axis direction.

In contrast, as shown in Fig. 5(b), when the two driving arms 13 of each pair flex inward (toward each other) in the x-axis direction, a bending moment thereof is transmitted to the corresponding base portion 9b, and the corresponding base portion 9b flexes toward the other side in the y-axis direction. The other side in the y-axis direction is specifically a direction toward the base from the end of the driving arms 13, and, in the unit 5A, is the +y side, and, in the unit 5B, is the -y axis. As a result of each base portion 9b being flexed toward the other side in the y-axis direction, the corresponding detection arm 15 is displaced toward the other side in the y-axis direction.

In each unit 5, when the two driving arms 13 vibrate in such a manner as to repeatedly flex outward in the x-axis direction and inward in the x-axis direction, the corresponding detection arm 15 vibrates in the y-axis direction.

Focusing on the two units 5, as already described, the two driving arms that are positioned on the same side in the x-axis direction (the two driving arms 13A and 13C, or the two driving arms 13B and 13D) vibrate in the same phase. From a different viewpoint, the two units 5 vibrate in the same phase from the viewpoint of the inward flexing in the x-axis direction of the two driving arms 13 and the outward flexing in the x-axis direction of the two driving arms 13. However, since the two units 5 face in directions opposite to each other in the y-axis direction, the detection arms 15A and 15B vibrate in phases opposite to each other to be displaced toward sides that are opposite to each other in the y-axis direction.

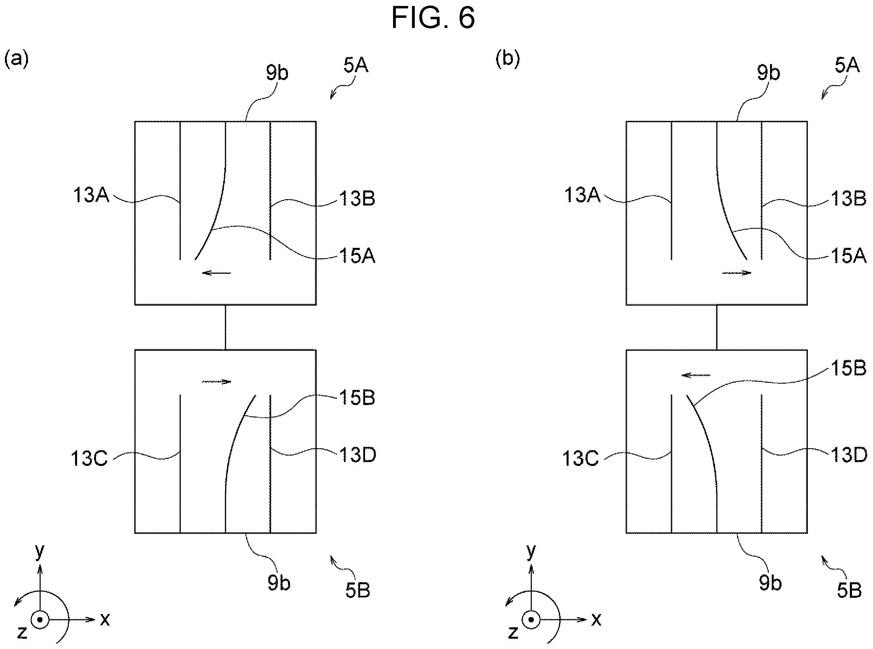

Fig. 6(a) and Fig. 6(b) are each a schematic plan view for illustrating vibrations of the detection arms 15 caused by a Coriolis force. Fig. 6(a) and Fig. 6(b) correspond to the state in Fig. 5(a) and the state in Fig. 5(b), respectively. These figures do not show deformations of the driving arms 13 and the base portions 9b.

As illustrated with reference to Fig. 5(a) and Fig. 5(b), the piezoelectric body 3 vibrates. In this state, when the sensor element 1 is rotated around the z axis, the detection arms 15 vibrate (are displaced) in the y-axis direction, and thus vibrate (are deformed) in a direction (x-axis direction) orthogonal to the rotation axis (z axis) and the vibration direction (y axis) by a Coriolis force. A signal produced by the deformation (for example, a voltage) is taken out by the detection electrodes 23 as described above. The Coriolis force (and thus the voltage of the signal that is detected) increases as angular velocity increases. Therefore, the angular velocity is detected.

Focusing on the two units 5, since the two detection arms 15 vibrate in phases opposite to each other to be displaced toward sides that are opposite to each other in the y-axis direction due to the flexing of the corresponding base portion 9b, the two detection arms vibrate in phases opposite to each other to be flexed toward sides that are opposite to each other in the x-axis direction by a Coriolis force. In the connection relationship of the detection electrodes 23 above, the signals detected at the two detection arms 15 are added to each other.

As described above, in the present embodiment, the angular velocity sensor 51 includes the sensor element 1 and the mounting base body 55 that supports the sensor element 1. The sensor element 1 includes the piezoelectric body 3, the plurality of excitation electrodes 21, and the plurality of detection electrodes 23. The piezoelectric body 3 includes the base portions 9b, two driving arms 13, and the detection arms 15. Each base portion 9b is such that the x-axis direction of the orthogonal coordinate system xyz is the length direction. The two driving arms 13 extend in the y-axis direction in a row with respect to each other from the corresponding base portion 9b at positions that are situated away from each other in the x-axis direction. Each detection arm 15 extends in the y-axis direction from the base portion 9b at a position situated in the center between the two driving arms 13. The plurality of excitation electrodes 21 is positioned on a corresponding one of the two driving arms 13 in an arrangement and connection relationship in which the two driving arms 13 are excited in phases that are opposite to each other in the x-axis direction. The plurality of detection electrodes 23 is positioned on a corresponding one of the detection arms 15 in an arrangement in which a signal that is produced by the vibration of the corresponding detection arm 15 in the x-axis direction or the z-axis direction (in the present embodiment, the x-axis direction) is taken out.

Further, in the present embodiment, the piezoelectric body 3 includes the frame portions 9, the retention portions 11, and the supporting portion 7. When viewed in the z-axis direction, each frame portion 9 constitutes the opening 9a. When viewed in the z-axis direction, each frame portion 9 includes, as parts around the opening 9a, the base portion 9b and the opposing portion 9c that is positioned on a side opposite to the base portion 9b with the opening 9a in between. When viewed in the z-axis direction, each retention portion 11 extends to the outside of the opening 9a from the opposing portion 9c (for example, in the y-axis direction). The supporting portion 7 is connected to the retention portions 11 on sides opposite to the opposing portions 9c, and is supported by the mounting base body 55. Each frame portion 9 is supported at one point by the retention portion 11.

Therefore, for example, the precision of detection of angular velocity is increased. For example, the details are as follows. In the present embodiment, the sensor element 1 and the mounting base body 55 are joined at a plurality of positions situated away from each other (positions of the terminals 27 and the pads 55b). At this time, due to hardening and contraction or the like of the bumps 59, the plurality of terminals 27 is subjected to forces acting in directions that differ from each other, and thus, the supporting portion 7 may be deformed. From a different viewpoint, unintended stress may be applied to the supporting portion 7. At this time, in the present embodiment, since each frame portion 9 is supported at one point by the retention portion 11, although the deformation of the supporting portion 7 displaces the frame portions 9, the probability of the frame portions 9 being deformed is reduced. From a different viewpoint, stress that is transmitted to the frame portions 9 from the supporting portion 7 is reduced. As a result, the influence of the stress applied to the supporting portion 7 on the vibration of the driving arms 13 and the detection arms 15 extending from a corresponding one of the frame portions 9 is reduced. Therefore, variations in the detection precision caused by variations in the mounting of the sensor element 1 on the mounting base body 55 are reduced.

Fig. 5(a) and Fig. 5(b) focuses on the flexing of the base portions 9b. Each frame portion 9 can be flexed by the vibration of the driving arms 13 even at portions other than the base portion 9b that are not connected to the retention portion 11 (for example, the two side portions 9d). In other words, although each frame portion 9 is constituted to provide a one-point support between the base portion 9b and the supporting portion 7, each frame portion 9 acts to make it easier for the base portion 9b to flex. Therefore, for example, it is possible to increase the amplitude of each detection arm 15 in the y-axis direction and to increase detection sensitivity.

In the present embodiment, two driving arms 13 extend into the corresponding opening 9a from the corresponding base portion 9b. Each detection arm 15 extends into the opening 9a from the base portion 9b.

In this case, for example, the openings 9a that are formed when the frame portions 9 for one-point retention are formed can be effectively used as regions in which the driving arms 13 and the detection arms 15 are disposed. As a result, for example, the sensor element 1 is easily reduced in size. By positioning the driving arms 13 and the detection arms 15 (and the conductors that are positioned on these arms) in a corresponding one of the openings 9a, the driving arms 13 and the detection arms 15 are, for example, protected from contact with the outside by a corresponding one of the frame portions 9. As a result, for example, when transporting the sensor element 1 and mounting the sensor element 1 onto the mounting base body 55, the probability of the sensor element 1 being scratched is reduced and thus the probability of detection precision being reduced is reduced. For example, when a shock having a small relationship with the angular velocity of an object to be detected is applied to the sensor element 1 and the driving arms 13 may be excessively deformed, each frame portion 9 abuts upon the corresponding driving arms 13 and can function as a stopper that reduces the probability of excessive deformation.

In the present embodiment, all of the driving arms 13 and all of the detection arms 15 extending from a corresponding one of the frame portions 9 extend into a corresponding one of the openings 9a.

In this case, for example, the effects of reducing the size above and the effects of protecting the driving arms 13 and the detection arms 15 by a corresponding one of the frame portions 9 are increased.

In the present embodiment, each retention portion 11 extends to the outside of the opening 9a from the base portion 9b, and is connected to the supporting portion 7. The piezoelectric body 3 includes the two units 5. Each unit 5 includes the retention portion 11, the frame portion 9, the two driving arms 13, and the detection arm 15. The two units 5 face each other on sides toward which the retention portions 11 extend from the respective frame portions 9.

In this case, for example, as long as the supporting portion 7 includes a portion that is positioned between the two units 5, the supporting portion 7 is capable of supporting the two units 5. In other words, a portion (connection portion 17) of the supporting portion 7 that is connected to the retention portions 11 can be shared by the two units 5. As a result, for example, the sensor element 1 is easily reduced in size. By providing the two units 5 and exciting the two units 5 in phases that are the same, at least parts of the acceleration that is applied to the sensor element 1 as a result of vibrating the base portions 9b and the detection arms 15 in the y-axis direction can be caused to cancel each other out at the two units 5. As a result, for example, it is possible to reduce unnecessary vibration that vibrates the entire sensor element 1 in the y-axis direction.

### [Second Embodiment]

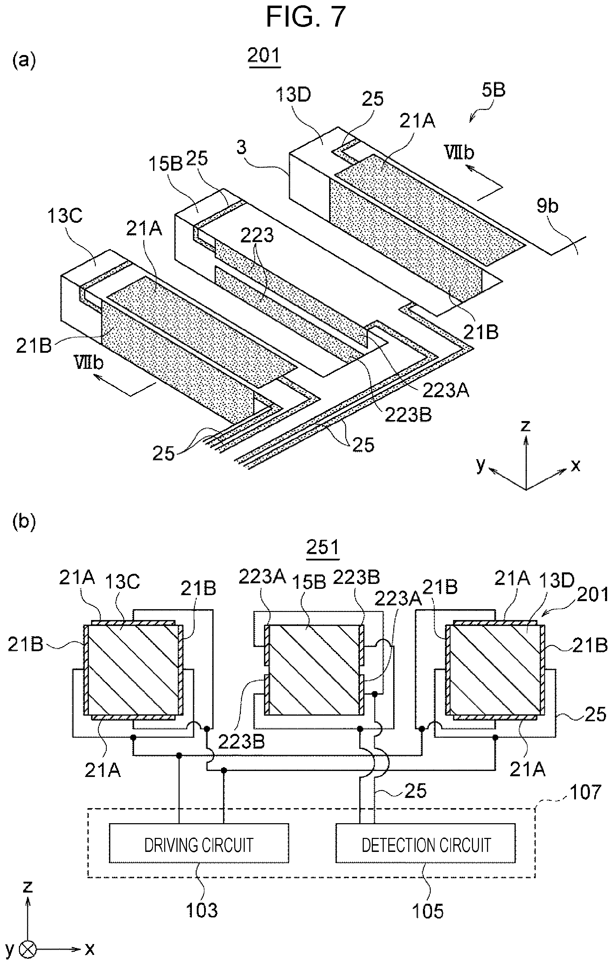

Fig. 7(a) is a perspective view similar to Fig. 4(a) and showing in enlarged form a part of a sensor element 201 according to the second embodiment. Fig. 7(b) is similar to Fig. 4(b) and shows an angular velocity sensor 251 according to the second embodiment, and includes a cross section along line VIIb-VIIb in Fig. 7(a).

As in the angular velocity sensor 51 according to the first embodiment, in the angular velocity sensor 251 according to the second embodiment, by vibrating two driving arms 13 in the x-axis direction, a base portion 9b is bent (vibrated) and thus a detection arm 15 is displaced (vibrated) in the y-axis direction. In addition, a Coriolis force is caused to directly act upon the detection arm 15. However, whereas the angular velocity sensor 51 detects rotation around the z axis, the angular velocity sensor 251 detects rotation around the x axis. The details are as follows.

A sensor element 201 includes a piezoelectric body 3, a plurality of excitation electrodes 21, a plurality of detection electrodes 223 (223A and 223B), a plurality of terminals 27 (Fig. 3), and a plurality of wires 25. These are basically the same as those of the sensor element 1 of the first embodiment excluding an arrangement and connection relationship of the plurality of detection electrodes 223. Figs. 1 to 3 may be understood as illustrating the sensor element 201.

However, in the present embodiment, unlike in the first embodiment, each detection arm 15 is intended to vibrate in the z-axis direction by a Coriolis force. Based on such a difference, various dimensions may differ from those of the first embodiment.

In each detection arm 15, detection arms 223A are each provided in a corresponding one of a region on a positive side in the z-axis direction of a surface facing a negative side in the x-axis direction (for example, a positive side from the center of the surface) and a region on a negative side in the z-axis direction of a surface facing a positive side in the x-axis direction (for example, a negative side from the center of the surface). In each detection arm 15, detection electrodes 223B are each provided in a corresponding one of a region on a negative side in the z-axis direction of the surface facing the negative side in the x-axis direction (for example, a negative side from the center of the surface) and a region on a positive side in the z-axis direction of the surface facing the positive side in the x-axis direction (for example, a positive side from the center of the surface).

On each side surface of each detection arm 15, the detection electrodes 223A and 223B extend along the detection arm 15 to be disposed apart from each other by a suitable interval to prevent the detection electrodes 223A and 223B from being short-circuited. In each detection arm 15, the two detection electrodes 223A are connected to each other by, for example, the wire 25. In each detection arm 15, the two detection electrodes 223B are connected to each other by, for example, the wire 25.

In the arrangement and connection relationship of such detection electrodes 223, when each detection arm 15 flexes in the z-axis direction, for example, an electric field parallel to the z-axis direction is produced. That is, at the side surfaces of each detection arm 15, a voltage is produced between the detection electrodes 223A and the detection electrodes 223B. The directions of the electric field are determined by the directions of a polarization axis and the directions of a curvature (the positive side or the negative side in the z-axis direction), and the direction of the electric field at a positive-side portion in the x-axis direction is opposite to that at a negative-side portion in the x-axis direction. The voltage (electric field) is output to the detection electrodes 223A and the detection electrodes 223B. When each detection arm 15 vibrates in the z-axis direction, the voltage is detected as an alternating-current voltage. The electric field may be one in which an electric field parallel to the z-axis direction dominates as described above, or one in which, in a direction parallel to the x-axis direction, a positive-side portion and a negative side portion in the z-axis direction have electric fields that are opposite to each other by a large proportion. In either case, the voltage that is in accordance with the flexing of the detection arms 15 in the z-axis direction is produced between the detection electrodes 223A and the detection electrodes 223B.

Although not particularly illustrated, one or more through grooves (slits) extending through the lower surface from the upper surface of a corresponding one of the detection arms 15 in a longitudinal direction of the corresponding one of the detection arms 15 may be formed in each detection arm 15. In each of a plurality of long portions separated by the through grooves, as in each detection arm 15 in the illustrated example, the detection electrodes 223A and 223B may be arranged and connected. In this case, compared with when the plurality of detection electrodes 223 is provided on only outer sides of a corresponding one of the detection arms 15, the area thereof as a whole is increased. As a result, an electric charge that is produced in each detection arm 15 can be effectively taken out as an electric signal.

At two units 5 (two detection arms 15), the detection electrodes 223A and the detection electrodes 223B are connected to each other. They are connected by, for example, the wires 25. In such a connection relationship, when the two detection arms 15 flex toward sides that are opposite to each other in the z-axis direction, the signals that are taken out by both of the detection arms 15 are added.

As mentioned in the description of the first embodiment, unlike in the first embodiment (and the present embodiment), when the two units 5 are focused upon, for example, at the two driving arms 13 that are positioned on the same side in the x-axis direction (the two driving arms 13A and 13C or the two driving arms 13B and 13D), the excitation electrodes 21A and the excitation electrodes 21B may have the same electric potential. In this case, at the two detection arms 15, the detection electrodes 223A are connected to each other, and the detection electrodes 223B are connected to each other.

As described above, from the viewpoint of electric potential, the plurality of detection electrodes 223 is divided into two sets. Similarly to the first embodiment, the two sets of detection electrodes 223 are connected to two terminals 27 by the wires 25.

### (Operation of Angular Velocity Sensor)

The excitation of the piezoelectric body 3 in the second embodiment is the same as the excitation in the first embodiment. Fig. 5(a) and Fig. 5(b) may be understood as figures that show the excitation states of the piezoelectric body 3 in the second embodiment. Therefore, for example, in each unit 5, the two driving arms 13 vibrate to move toward each other and away from each other in the x-axis direction, and the detection arm 15 is displaced (vibrates) in the y-axis direction.

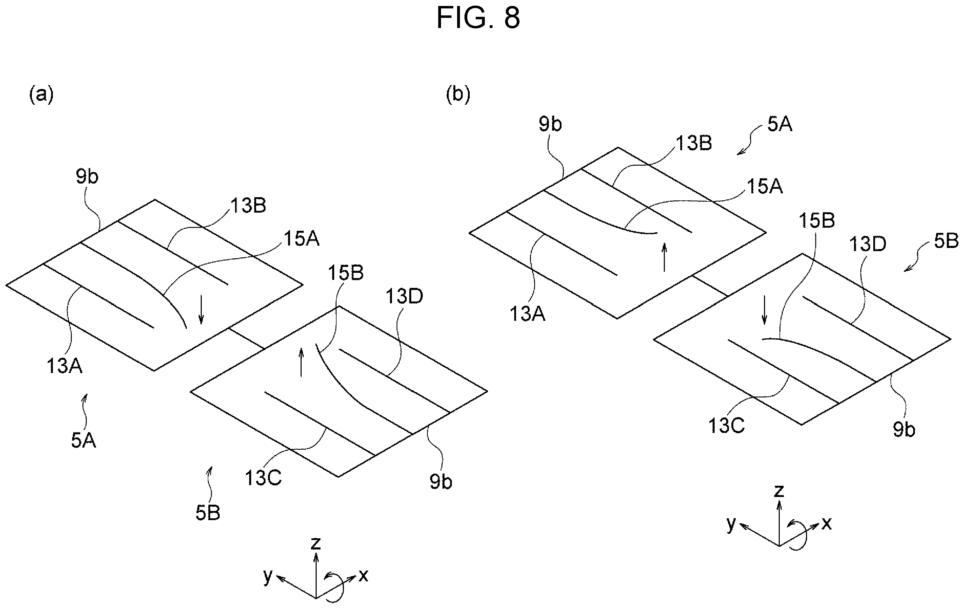

Fig. 8(a) and Fig. 8(b) are each a schematic perspective view for illustrating vibrations of the detection arms 15 by a Coriolis force. Fig. 8(a) and Fig. 8(b) correspond to the excitation state in Fig. 5(a) and the excitation state in Fig. 5(b), respectively.

As illustrated with reference to Fig. 5(a) and Fig. 5(b), the piezoelectric body 3 is in a vibrating state. In this state, when the sensor element 201 is rotated around the x axis, the detection arms 15 vibrate (are displaced) in the y-axis direction, and thus vibrate (are deformed) in a direction (z-axis direction) orthogonal to the rotation axis (x axis) and the vibration direction (y axis) by a Coriolis force. A signal (voltage) produced by the deformation is taken out by the detection electrodes 223 as described above. The Coriolis force (and thus the voltage of the signal that is detected) increases as angular velocity increases. Therefore, the angular velocity is detected.

Focusing on the two units 5, since the two detection arms 15 vibrate in phases opposite to each other to be displaced toward sides that are opposite to each other in the y-axis direction by flexing the base portions 9b, the two detection arms 15 vibrate in phases that are opposite to each other to flex towards sides that are opposite to each other in the z-axis direction by a Coriolis force. In such a connection relationship of the detection electrodes 223 above, the signals that are detected by the two detection arms 15 are added.

### [Third Embodiment]

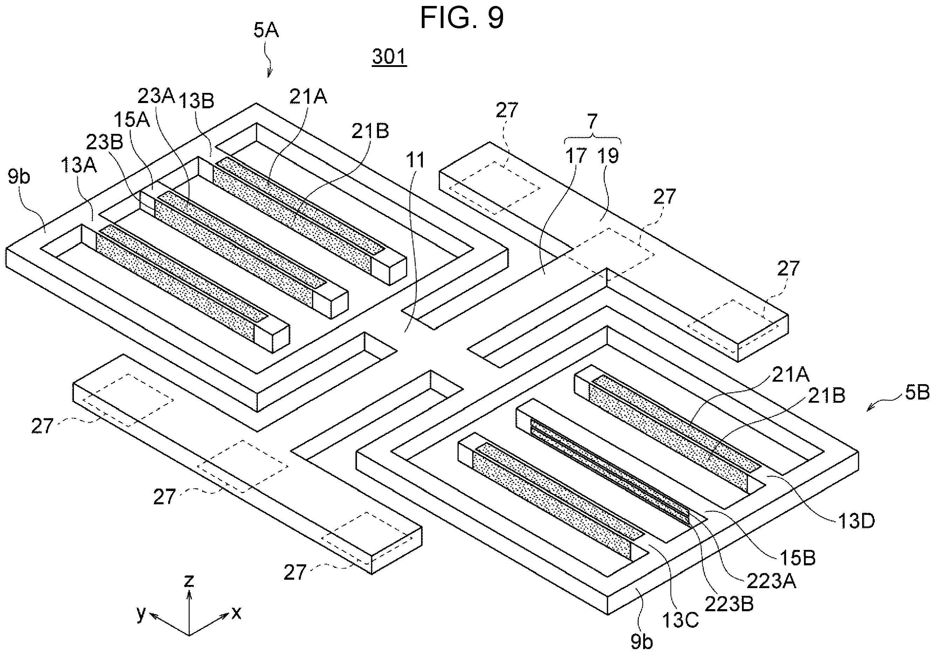

Fig. 9 is a perspective view showing a sensor element 301 according to a third embodiment. Fig. 9 shows, similarly to Fig. 3, a piezoelectric body 3 and excitation electrodes 21 and detection electrodes 23 and 223.

In one of two units 5 (here, a unit 5A) of the sensor element 301, similarly to the first embodiment, the detection electrodes 23 are provided in an arrangement and connection relationship that allows the vibration of a detection arm 15 (15A) in the x-axis direction to be detected. In contrast, in the other of the two units 5 (here, a unit 5B), similarly to the second embodiment, the detection electrodes 223 are provided in an arrangement and connection relationship that allows the vibration of a detection arm 15 (15B) in the z-axis direction to be detected. That is, the sensor element 301 is constituted as a sensor element for a multi-axis angular velocity sensor, which detects the angular velocity around the z axis by the unit 5A and the angular velocity around the x axis by the unit 5B.

In the two units 5, for example, similarly to the first embodiment, the vibrations of the driving arms 13 may have the same frequency and the same phase. That is, at the two units 5, the excitation electrodes 21A may have the same electric potential, and the excitation electrodes 21B may have the same electric potential. In contrast, since the detection electrodes 23 and the detection electrodes 223 output signals that are in accordance with different angular velocities, the detection electrodes 23 and the detection electrodes 223 are not connected to each other. From the viewpoint of the electric potentials of the excitation electrodes 21 and the electric potentials of the detection electrodes 23 and the detection electrodes 223, six terminals 27 are provided for the six sets of electrodes. Their positions may be appropriate positions on a supporting portion 7 (mounting portions 19).

### [Fourth Embodiment]

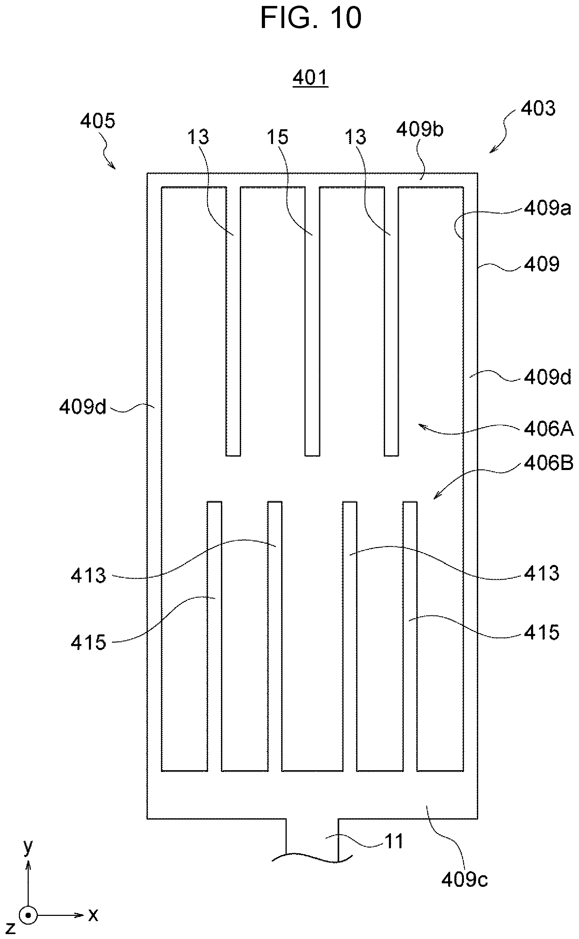

Fig. 10 is a plan view of a main portion of a sensor element 401 according to a fourth embodiment. This figure shows a part of a piezoelectric body 403 of the sensor element 401.

Similarly to the first embodiment, the piezoelectric body 403 includes a retention portion 11, and a frame portion 409 that is supported at one point by the retention portion 11. Here, although only one unit 405 is shown, similarly to the first embodiment, two units 405 may be provided, or the structure of a supporting portion 7 that supports the two units 405 may be the same as, for example, the structure of the supporting portion 7 of the first embodiment.

Similarly to the first embodiment, driving arms 13 and a detection arm 15 extend from a base portion 409b of the frame portion 409, the base portion 409b being positioned opposite to the retention portion 11 with an opening 409a in between. However, in the present embodiment, unlike in the first embodiment, at least one driving arm 413 and at least one detection arm 415 also extend from an opposing portion 409c on a side of the retention portion 11. That is, the sensor element 401 includes a first sensor portion 406A that is positioned on a side of the base portion 409b and a second sensor portion 406B that is positioned on a side of the opposing portion 409c.

A vibration mode regarding the detection of angular velocity of the first sensor portion 406A is the same as that of the first embodiment or the second embodiment. A vibration mode regarding the detection of angular velocity of the second sensor portion 406B differs from that of the first sensor portion 406A. In the vibration mode of the second sensor portion 406B, the opposing portion 409c for displacing the detection arm 415 in the y-axis direction does not need to be flexed. Therefore, as in the illustrated example, the opposing portion 409c may have a larger width (y-axis direction) than the width of the base portion 409b.

The rotation axis at which the angular velocity is detected by the second sensor portion 406B may be the same as or different from the rotation axis at which the angular velocity is detected by the first sensor portion 406A. For example, the rotation axis at which the second sensor portion 406B detects the angular velocity is the y axis. As can be understood from the description thus far, the first sensor portion 406A is capable of detecting the angular velocity around the z axis (first embodiment) or the angular velocity around the x axis (second embodiment). Therefore, when the second sensor portion 406B detects the angular velocity around the y axis, the sensor element 401 constitutes a multi-axis angular velocity sensor that detects the angular velocity around the z axis and the angular velocity around the y axis, or a multi-axis angular velocity sensor that detects the angular velocity around the x axis and the angular velocity around the y axis.

When the second sensor portion 406 detects the angular velocity around the y axis, the second sensor portion 406 may have various structures, including publicly known structures. Four examples are simply described below.

In the illustrated example, the second sensor portion 406 has a structure that is the same as the structure of the angular velocity sensor that is described in Japanese Unexamined Patent Application Publication No. 2015-141182. The contents thereof may be incorporated by reference herein.

The second sensor portion 406 of the illustrated example includes two driving arms 413 that are disposed line-symmetrically with respect to a symmetry axis (not shown) that is parallel to the y axis and that passes the center of the opposing portion 409c, and two detection arms 415 that are disposed line-symmetrically with respect to the symmetry axis on outer sides (or inner sides) of the two driving arms 413.

Similarly to the two driving arms 13 of the first embodiment, the two driving arms 413 are excited in the x-axis direction in phases that are opposite to each other. For balancing with this vibration, the two detection arms 415 are also vibrated in the x-axis direction in phases that are opposite to each other. When the second sensor portion 406 is rotated around the y axis, the two detection arms 415 vibrate in phases that are opposite to each other in the z-axis direction by a Coriolis force. Therefore, the angular velocity is detected.

As can be understood from the operation above, in an arrangement and connection relationship that is the same as that of the first embodiment, a plurality of excitation electrodes 21 are provided on the two driving arms 413. In an arrangement and connection relationship that is the same as that of the second embodiment, a plurality of detection electrodes 223 are provided on each detection arm 415. In the two detection arms 415, detection electrodes 223A and detection electrodes 223B are connected to each other.

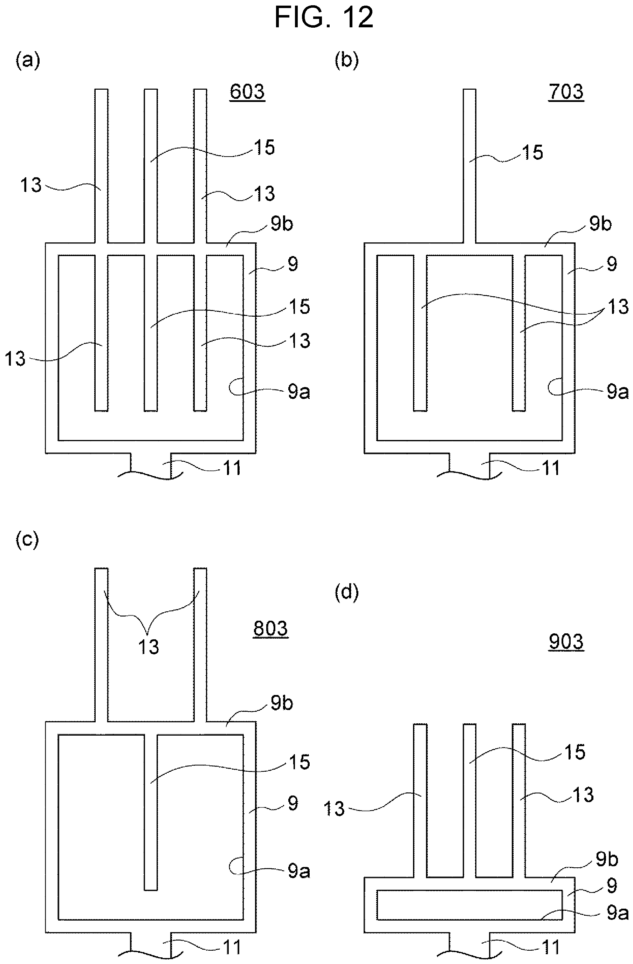

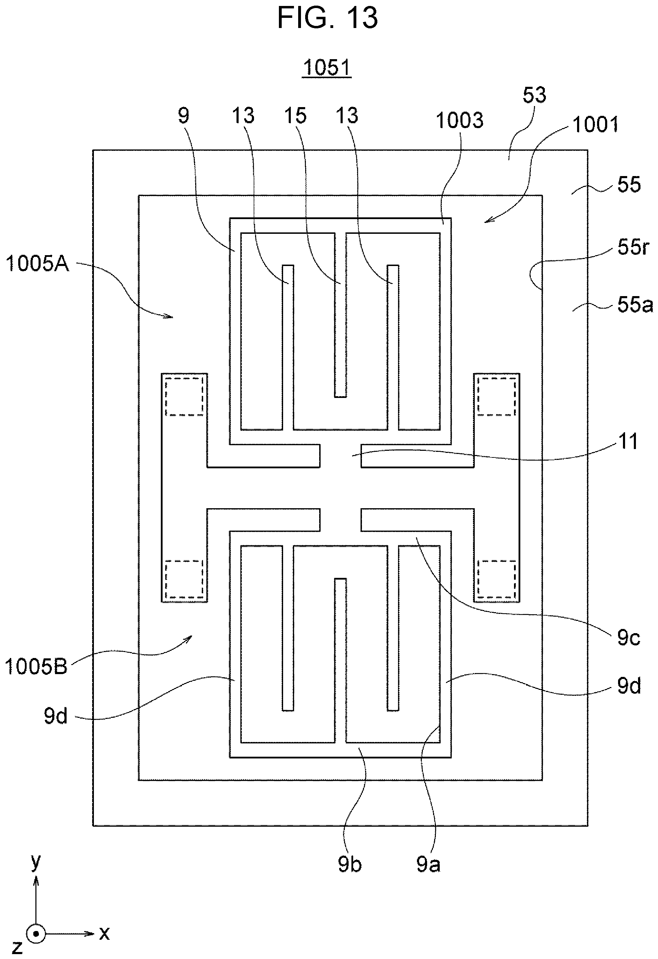

In Fig. 12 and Fig. 13 of Patent Literature 1, the structure that is indicated as a sensor that detects the angular velocity around the y axis may be applied to the second sensor portion 406.

The second sensor portion 406 to which the sensor of Patent Literature 1 above is applied includes (at least) two driving arms 413 and two detection arms 415 that are disposed line-symmetrically with respect to a symmetry axis (not shown) that is parallel to the y axis and that passes the center of the opposing portion 409c. The two driving arms 413 extend toward one side in the y-axis direction from the opposing portion 409c, and the two driving arms 413 extend toward the other side in the y-axis direction from the opposing portion 409c.

Similarly to the two driving arms 13 of the first embodiment, the two driving arms 413 are excited in the x-axis direction in phases that are opposite to each other. When the second sensor portion 406 is rotated around the y axis, the two driving arms 413 vibrate in phases that are opposite to each other in the z-axis direction by a Coriolis force. For balancing with this vibration, the two detection arms 415 are also vibrated in phases that are opposite to each other in the z-axis direction. Therefore, the angular velocity is detected.

As can be understood from the operation above, in an arrangement and connection relationship that is the same as that of the first embodiment, a plurality of excitation electrodes 21 are provided on the two driving arms 413. In an arrangement and connection relationship that is the same as that of the second embodiment, a plurality of detection electrodes 223 are provided on each detection arm 415. In the two detection arms 415, detection electrodes 223A and detection electrodes 223B are connected to each other.

The sensor that is disclosed in Japanese Unexamined Patent Application Publication No. 2015-99130 may be applied to the second sensor portion 406. The contents thereof may be incorporated by reference herein.

The second sensor portion 406 to which the sensor of the document above is applied includes (at least) two driving arms 413 that are disposed line-symmetrically with respect to a symmetry axis (not shown) that is parallel to the y axis and that passes the center of the opposing portion 409c, and a detection arm 415 that extends on the symmetry axis. For example, the two driving arms 413 and the detection arm 415 extend in a row.

The two driving arms 413 are excited in the x-axis direction in the same phase. When the second sensor portion 406 is rotated around the y axis, the two driving arms 413 vibrate in the same phase in the z-axis direction by a Coriolis force. For balancing with this vibration, the detection arm 415 also vibrates in the z-axis direction. Therefore, the angular velocity is detected.

As can be understood from the operation above, in an arrangement and connection relationship that is the same as that of the first embodiment, a plurality of excitation electrodes 21 are provided on each driving arm 413. However, at the two driving arms 413, the excitation electrodes 21A are connected to each other, and the excitation electrodes 21B are connected to each other. In an arrangement and connection relationship that is the same as that of the second embodiment, a plurality of detection electrodes 223 are provided on the detection arm 415.

A so-called tuning fork sensor may be applied to the second sensor portion 406. In the second sensor portion 406 to which the tuning fork sensor is applied, one driving arm 413 and one detection arm 415 that extend in the y-axis direction in a row with respect to each other are disposed line-symmetrically with respect to a symmetry axis (not shown) that is parallel to the y axis and that passes the center of the opposing portion 409c. The driving arm 413 is excited in the x-axis direction. For balancing with this vibration, the detection arm 415 also vibrates in the x-axis direction. When the second sensor portion 406 is rotated around the y axis, the detection arm 415 vibrates in the z-axis direction by a Coriolis force. Therefore, the angular velocity is detected. As can be understood from the operation above, in an arrangement and connection relationship that is the same as that of the first embodiment, a plurality of excitation electrodes 21 are provided on the driving arm 413. In an arrangement and connection relationship that is the same as that of the second embodiment, a plurality of detection electrodes 223 are provided on the detection arm 415.

As described above, in the fourth embodiment, the piezoelectric body 403 includes, in addition to the structure of the piezoelectric body 3 of the first embodiment, second driving arms (driving arms 413) and second detection arms (detection arms 415). The driving arms 413 and the detection arms 415 extend in the y-axis direction from the opposing portion 409c. The sensor element 401 (second sensor portion 406B) includes the plurality of excitation electrodes 21 (Fig. 4) and the plurality of detection electrodes 223 (Fig. 7). The plurality of excitation electrodes 21 is positioned on the driving arms 413 in an arrangement in which the driving arms 413 are excited in the x-axis direction. The plurality of detection electrodes 223 is disposed on the detection arms 415 in an arrangement in which signals that are produced by vibrating the detection arms 415 in the z-axis direction are cancelled out.

Therefore, for example, a multi-axis angular velocity sensor can be realized by one piezoelectric body 403. For example, in a structure in which the driving arms 413 and the detection arms 415 extend into the opening 409a of the frame portion 409, the lengths of side portions 409d of the frame portion 409 can be increased by a length equivalent to the lengths of the driving arms 413 and the lengths of the detection arms 415. By increasing the lengths of the side portions 409d, for example, the base portion 409b is easily flexed and the detection sensitivity of the first sensor portion 406A is increased. Therefore, for example, compared with when a multi-axis angular velocity sensor is constituted by mounting two uniaxial sensor elements onto the mounting base body 55, it is possible to increase the detection sensitivity while making the same the size of a space at which the sensor element 401 is disposed on the mounting base body 55.

### [Modifications of Shapes of Piezoelectric Body]

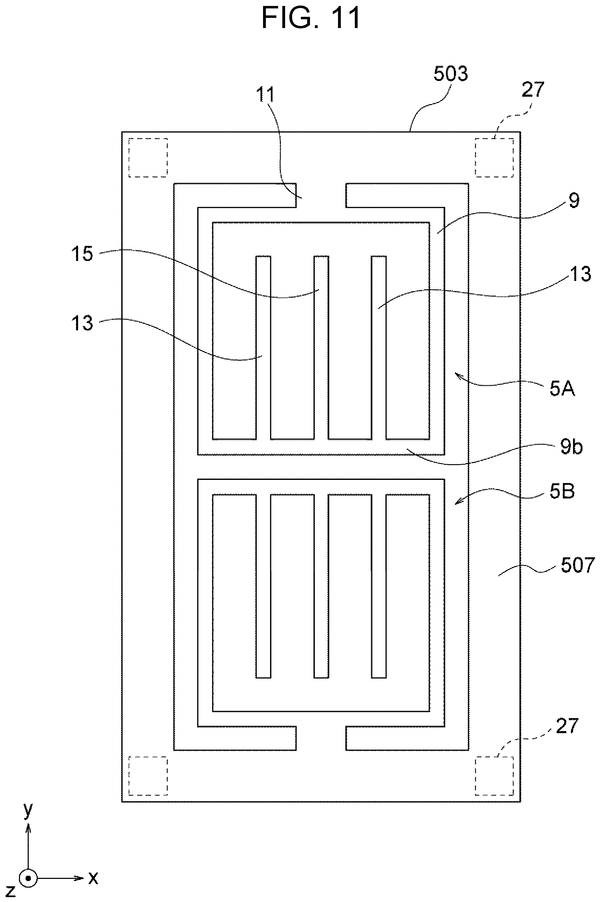

With reference to Fig. 11 to Fig. 12(d), modifications of the shapes of the piezoelectric body are described. The modifications that are exemplified below may be applied to any one of the first embodiment to the fourth embodiment. The way of thinking regarding modifications from the embodiments may be applied to a fifth embodiment described below.

### (First Modification)

Fig. 11 is a plan view showing a main portion of a sensor element (piezoelectric body 503) according to a first modification.

In the first embodiment, the two units 5 are disposed so that their the retention portions 11 face each other. In contrast, in the present modification, two units 5 are disposed so that their base portions 9b face each other.

In the first embodiment, the supporting portion 7 has an H shape in plan view. In contrast, in the present modification, a supporting portion 507 has a frame shape that surrounds a predetermined number of units 5 (in the present modification, two units 5) in plan view. In this case, a plurality of terminals 27 may be disposed at appropriate positions on the frame-shaped supporting portion 507, or may be disposed at four corners of the frame-shaped supporting portion 507 (the illustrated example), or may be disposed at any other positions of frame-shaped supporting portion 507.

### (Second Modification)

Fig. 12(a) is a plan view showing a main portion of a piezoelectric body 603 according to a second modification. As shown in this figure, not only driving arms 13 and a detection arm 15 that extend into an opening 9a from a base portion 9b, but also driving arms 13 and a detection arm 15 that extend to the outside of the opening 9a from the base portion 9b may be provided. In this structure, the two driving arms 13 that extend into the opening 9a and the two driving arms 13 that extend to the outside of the opening 9a are excited in phases that are opposite to each other. Regarding this structure and the operation thereof, the contents of the description about the structure and the operation thereof that are disclosed in Fig. 9(a) to Fig. 10(b) of Patent literature 1 may be incorporated by reference herein.

### (Third Modification)

Fig. 12(b) is a plan view showing a main portion of a piezoelectric body 703 according to a third modification. As shown in this figure, driving arms 13 may extend into an opening 9a from a base portion 9b, and a detection arm 15 may extend to the outside of the opening 9a from the base portion 9b.

### (Fourth Modification)

Fig. 12(c) is a plan view showing a main portion of a piezoelectric body 803 according to a fourth modification. As shown in this figure, contrary to the third modification above, driving arms 13 may extend to the outside of an opening 9a from a base portion 9b, and a detection arm 15 may extend into the opening 9a from the base portion 9b.

### (Fifth modification)

Fig. 12(d) is a plan view showing a main portion of a piezoelectric body 903 according to a fifth modification. As shown in this figure, contrary to the embodiments, driving arms 13 and a detection arm 15 may extend only to the outside of an opening 9a from a base portion 9b. In this case, a frame portion 9 does not need to have a size allowing the frame portion 9 to surround the driving arms 13 and the detection arm 15.

### [Fifth Embodiment]

Fig. 13 is a plan view showing a general structure of an inside of an angular velocity sensor 1051 according to the fifth embodiment, and corresponds to Fig. 1 showing the first embodiment.

A sensor element 1001 according to the fifth embodiment differs from the sensor element 1 of the first embodiment in the positions of driving arms 13. Specifically, in each unit 5 of the piezoelectric body 3 of the first embodiment, the driving arms 13 extend from the base portion 9b of the frame portion 9. In contrast, in each unit 1005 (1005A or 1005B) of a piezoelectric body 1003 of the second embodiment, driving arms 13 extend from an opposing portion 9c.

The positions of the driving arms 13 in the x-axis direction may be, for example, the same as those of the first embodiment. At this time, the base portions 9b in the description of the first embodiment may be read as the opposing portions 9c. Therefore, for example, two driving arms 13 may be provided at positions that are symmetrical with respect to the center position of a corresponding one of the opposing portions 9c in the x-axis direction. In the present embodiment, two driving arms 13 may be said to extend from portions of a corresponding one of the opposing portions 9c on two sides in the x-axis direction with respect to a position at which the opposing portion 9c and a corresponding one of retention portions 11 are connected to each other. For example, as described in the first embodiment, each retention portion 11 may be connected to the central position of the corresponding opposing portion 9c in the x-axis direction.

Similarly to the first embodiment, each detection arm 15 is, for example, disposed between the two driving arms 13 in the x-axis direction, and, for example, at the center of the base portion 9b in the x-axis direction. However, unlike in the first embodiment, the driving arms 13 and the corresponding detection arm 15 extend in opposite directions. The driving arms 13 and the corresponding detection arm 15 may overlap each other at their end-side parts when viewed in the x-axis direction (at ranges thereof in the y-axis direction). Although not particularly illustrated, the driving arms 13 and the corresponding detection arm 15 may be provided without overlapping each other when viewed in the x-axis direction, or the corresponding detection arm 15 may be positioned so as not to be interposed between the two driving arms 13.

In the first embodiment, the base portions 9b of the respective frame portions 9 are intended to be flexed, and the other portions (opposing portion 9c and two side portions 9d) of each frame portion 9 are not intended to be flexed. On the other hand, as can be understood from the description of operation below, in the present embodiment, each opposing portion 9c and two side portions 9d corresponding thereto are also intended to be flexed, in addition to the base portions 9b. Due to this difference in operation, the specific dimensions of each opposing portion 9c and the two side portions 9d may differ from those of the first embodiment. For example, the lengths and the widths of each opposing portion 9c and the side portions 9d may be set so that the flexing resonance frequency approaches a frequency for exciting the driving arms 13.

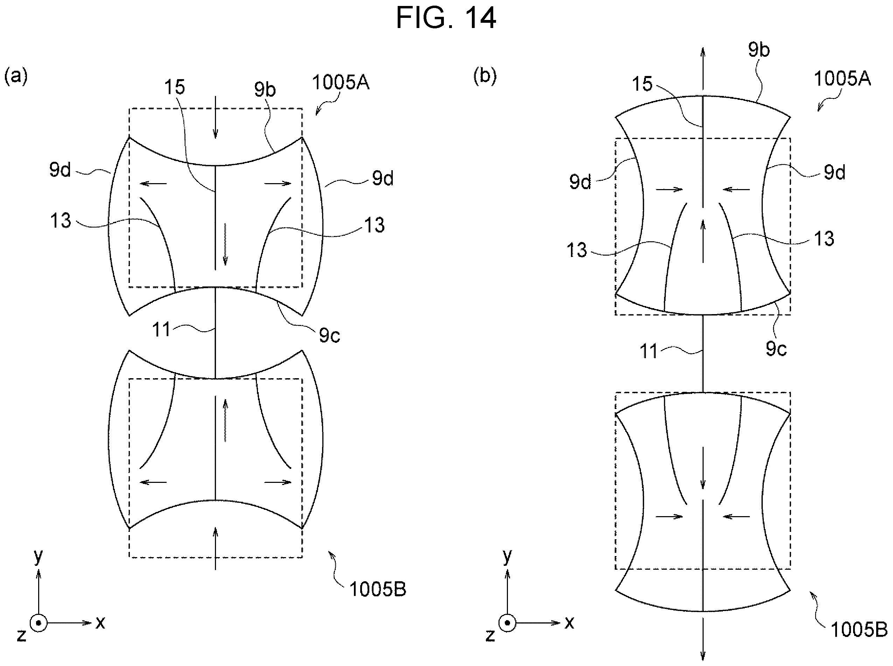

Fig. 14(a) and Fig. 14(b) are each a schematic plan view for illustrating excitations of the piezoelectric body 1003. Fig. 14(a) and Fig. 14(b) correspond to Fig. 5(a) and Fig. 5(b) illustrating the first embodiment, respectively.

In each unit 1005, the two driving arms 13 are excited as in the first embodiment. That is, the two driving arms 13 are excited in phases opposite to each other to be deformed in directions opposite to each other in the x-axis direction.

At this time, as shown in Fig. 14(a), when the two driving arms 13 flex outward (away from each other) in the x-axis direction, a bending moment thereof is transmitted to the corresponding base portion 9b through the corresponding opposing portion 9c and the corresponding two side portions 9d, and the corresponding base portion 9b flexes toward one side in the y-axis direction. The one side in the y-axis direction is specifically a direction toward an end from a base of the driving arms 13, and, in the unit 1005A, is a -y side, and, in the unit 1005B, is a +y axis. A portion of each opposing portion 9c on one side with respect the retention portion 11 (+x-side portion or -x-side portion) can be understood as being a cantilever supported by the retention portion 11. End portions of each cantilever (portions that are connected to the side portions 9d) are subjected to a bending moment from the corresponding driving arms 13 and are displaced toward one side in the y-axis direction (side that is the same as the one side in the y-axis direction regarding the flexing of the base portion 9b above). Thus, the two side portions 9d and the corresponding base portion 9b are displaced toward the one side in the y-axis direction. By performing at least one of the flexing and displacement of each base portion 9b above, the corresponding detection arm 15 is displaced toward the one side in the y-axis direction.

In contrast, as shown in Fig. 14(b), when the two driving arms 13 flex inward (toward each other) in the x-axis direction, a bending moment thereof is transmitted to the corresponding base portion 9b through the corresponding opposing portion 9c and the corresponding two side portions 9d, and the corresponding base portion 9b flexes toward the other side in the y-axis direction. The other side in the y-axis direction is specifically a direction toward the end from the base of the driving arms 13, and, in the unit 1005A, is the +y side, and, in the unit 1005B, is the -y axis. End portions of a portion of each opposing portion 9c that is a cantilever with respect the retention portion 11 (+x-side portion or -x-side portion) are subjected to a bending moment from the corresponding driving arms 13 and are displaced toward the other side in the y-axis direction (side that is the same as the other side in the y-axis direction regarding the flexing of the base portion 9b above). Thus, the two side portions 9d and the corresponding base portion 9b are displaced toward the other side in the y-axis direction. By performing at least one of the flexing and displacement of each base portion 9b above, the corresponding detection arm 15 is displaced toward the other side in the y-axis direction.

As described above, in each unit 1005, the detection arm 15 is displaced (vibrates) in the y-axis direction as in the embodiments described thus far. Therefore, for example, similarly to the first embodiment, the angular velocity around the z axis can be detected by the two units 1005. For example, similarly to the second embodiment, the angular velocity around the x axis can be detected by the two units 1005. For example, similarly to the third embodiment, the angular velocity around the z axis can be detected by one of the two units 1005, and the angular velocity around the x axis can be detected by the other of the two units 1005.

As described above, in the present embodiment, the angular velocity sensor 1051 includes the sensor element 1001 and a mounting base body 55 that supports the sensor element 1001. The sensor element 1001 includes the piezoelectric body 1003, a plurality of excitation electrodes 21, and a plurality of detection electrodes 23. The piezoelectric body 3 includes at least two driving arms 13 and a detection arm 15. The two driving arms 13 extend in the y-axis direction in a row with respect to each other at positions situated away from each other in the x-axis direction in an orthogonal coordinate system xyz. The detection arm 15 extends in the y-axis direction. The plurality of excitation electrodes 21 is positioned on the two driving arms 13 in an arrangement and connection relationship in which the two driving arms 13 are excited in phases that are opposite to each other in the x-axis direction. The plurality of detection electrodes 23 is positioned on the detection arm 15 in an arrangement in which a signal that is produced by the vibration of the detection arm 15 in the x-axis direction or the z-axis direction is cancelled out.

Further, in the present embodiment, when viewed in the z-axis direction, the piezoelectric body 1003 includes the frame portion 9, the retention portion 11, and the supporting portion 7. When viewed in the z-axis direction, the frame portion 9 constitutes an opening 9a. The frame portion 9 includes, as parts around the opening 9a, the base portion 9b whose x-axis direction is a length direction and the opposing portion 9c that is positioned on a side opposite to the base portion 9b with the opening 9a in between. When viewed in the z-axis direction, the retention portion 11 extends to the outside of the opening 9a from the opposing portion 9c (for example, in the y-axis direction). The supporting portion 7 is connected to a side of the retention portion 11 opposite to the opposing portion 9c, and is supported by the mounting base body 55. The two driving arms 13 extend from portions of the opposing portion 9c on two sides in the x-axis direction with respect to a position at which the opposing portion 9c and the retention portion 11 are connected to each other. The detection arm 15 extends from the base portion 9b.

Therefore, for example, detection precision can be increased. For example, as also described in the first embodiment, when the supporting portion 7 is deformed due to hardening and contraction or the like of the bumps 59, since the frame portion 9 is supported by the retention portion 11, the frame portion 9 is displaced, but is not easily deformed. That is, the probability of unintended stress being applied to the frame portion 9 is reduced. In addition, for example, in the first embodiment, each detection arm 15 is displaced by only the flexing of the corresponding base portion 9b, whereas, in the present embodiment, the detection arm 15 can be displaced by the flexing of the base portion 9b and the displacement of the base portion 9b caused by the flexing of the opposing portion 9c. As a result, sensitivity can be easily increased by increasing the displacement of the detection arm 15.

### (Modification of Fifth Embodiment)

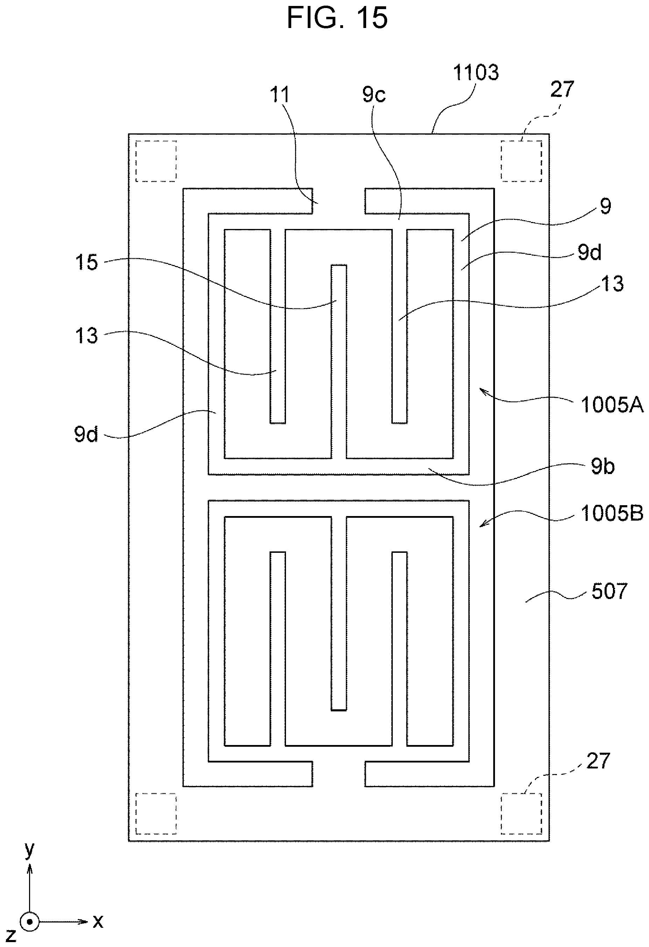

Fig. 15 is a plan view showing a main portion of a sensor element (piezoelectric body 1103) according to a modification of the fifth embodiment.

In the first modification shown in Fig. 11, in the first embodiment to the fourth embodiment, it has been described that the two units 5 may be disposed so that their base portions 9b face each other. Similarly, even in the fifth embodiment, the two units 5 may be such that two units 1005 are disposed so that their base portions 9b face each other. Fig. 15 shows such a modification.

Alternatively, although not particularly illustrated, even in the fifth embodiment, based on a point of view similar to that regarding the second modification (Fig. 12(a)), driving arms 13 that extend into the opening 9a from the opposing portion 9c, driving arms 13 that extend to the outside of the opening 9a from the opposing portion 9c, a detection arm 15 that extends into the opening 9a from the base portion 9b, and a detection arm 15 that extends to the outside of the opening 9a from the base portion 9b may be provided. Based on a point of view similar to that regarding the third modification (Fig. 12(b)), driving arms 13 that extend into the opening 9a from the opposing portion 9c, and a detection arm 15 that extends to the outside of the opening 9a from the base portion 9b may be provided. Based on a point of view similar to that regarding the fourth modification (Fig. 12(c)), driving arms 13 that extend to the outside of the opening 9a from the opposing portion 9c, and a detection arm 15 that extends into the opening 9a from the base portion 9b may be provided. Based on a point of view similar to that regarding the fifth modification (Fig. 12(d)), driving arms 13 that extend to the outside of the opening 9a from the opposing portion 9c, and a detection arm 15 that extends to the outside of the opening 9a from the base portion 9b may be provided.

The technology according to the present disclosure is not limited to the embodiments above and may be realized in various modes.

The sensor element or the angular velocity sensor may be constituted as a part of MEMS (Micro Electro Mechanical Systems). In this case, the piezoelectric body that constitutes the sensor element may be mounted on a substrate of the MEMS, or the substrate of the MEMS may be constituted by the piezoelectric body and a part thereof may constitute the piezoelectric body of the sensor element. In the former case, for example, the substrate of the MEMS is an example of the mounting base body, and, in the latter case, for example, the substrate of the MEMS is an example of the supporting portion.

As disclosed in, for example, Patent Literature 1, two or more driving arms corresponding to one driving arm may be provided. For example, in the first embodiment, two driving arms may be further provided on inner sides or outer sides of the two driving arms 13A and 13B. The two additional driving arms are, for example, similarly to the two driving arms 13A and 13B, disposed line-symmetrically with respect to a symmetry axis (not shown) that passes the center of the base portion 9b and that is parallel to the y axis. The two driving arms that are adjacent to each other on a +x side or a -x side with respect to the symmetry axis are excited in the same phase and function like one driving arm.

The sensor element is not limited to one that is mounted on the mounting base body by conductive bumps that are interposed between a lower surface of the supporting portion and the upper surface of the mounting base body. For example, the sensor element may be mounted by being fixed to the mounting base body by insulating bumps that are interposed between the lower surface of the supporting portion and the upper surface of the mounting base body and by connecting bonding wires to the terminals that are positioned on the upper surface of the sensor element. In this case, for example, as a bump material, a material having a low Young's modulus can be selected. Alternatively, the sensor element may be supported by providing leaf-spring-like terminals that join the supporting portion and the mounting base body to each other.

The first embodiment to the fifth embodiment may be combined. For example, in the fifth embodiment, similarly to the first embodiment to the third embodiment, driving arms that extend from the base portion may be provided in addition to the driving arms that extend from the opposing portion. These two driving arms may be excited so that, when the two driving arms that extend from the opposing portion approach each other in the x-axis direction, the two driving arms that extend from the base portion also approach each other in the x-axis direction, and, when the two driving arms that extend from the opposing portion move away from each other in the x-axis direction, the two driving arms that extend from the base portion also move away from each other in the x-axis direction.

### Reference Signs List

- 51: (and 251 and 1051) angular velocity sensor
- 1: (and 201, 301, 401, and 1001) sensor element
- 3: (and 403, 503, 1003, and 1103) piezoelectric body
- 7, 507: supporting portion
- 9: frame portion
- 9a: opening
- 9b: base portion
- 9c: opposing portion
- 11: retention portion
- 13: driving arm
- 15: detection arm
- 21: excitation electrode
- 23: detection electrode
- 55: mounting base body

## Claims

1. An angular velocity sensor comprising:
a mounting base body; and
a sensor element supported by the mounting base body,
the sensor element including:
a piezoelectric body that includes at least two driving arms and a detection arm, the at least two driving arms extending in a y-axis direction in a row with respect to each other at positions situated away from each other in an x-axis direction in an orthogonal coordinate system xyz, the detection arm extending in the y-axis direction,
a plurality of excitation electrodes that are positioned on the at least two driving arms in an arrangement and connection relationship in which the at least two driving arms are excited in phases that are opposite to each other in the x-axis direction, and
a plurality of detection electrodes that are positioned on the detection arm in an arrangement that cancels a signal that is produced by vibration of the detection arm in the x-axis direction or in a z-axis direction;
wherein the piezoelectric body further includes, when viewed in the z-axis direction,
a frame portion that constitutes an opening and that comprises, as parts around the opening, a base portion whose x-axis direction is a length direction and an opposing portion that is positioned on a side opposite to the base portion with the opening therebetween,
a retention portion that extends toward an outside of the opening from the opposing portion and that supports the frame portion, and
a supporting portion that is connected to a side of the retention portion opposite to the opposing portion and that is supported by the mounting base body;
wherein the at least two driving arms extend from portions of the opposing portion on two sides in the x-axis direction with respect to a position at which the opposing portion and the retention portion are connected to each other; and
wherein the detection arm extends from the base portion.

2. An angular velocity sensor comprising:
a mounting base body; and
a sensor element supported by the mounting base body, the sensor element including:
a piezoelectric body that includes at least two driving arms and a detection arm, the at least two driving arms extending in a y-axis direction in a row with respect to each other at positions situated away from each other in an x-axis direction in an orthogonal coordinate system xyz, the detection arm extending in the y-axis direction,
a plurality of excitation electrodes that are positioned on the at least two driving arms in an arrangement and connection relationship in which the at least two driving arms are excited in phases that are opposite to each other in the x-axis direction, and
a plurality of detection electrodes that are positioned on the detection arm in an arrangement that cancels a signal that is produced by vibration of the detection arm in the x-axis direction or in a z-axis direction;
wherein the piezoelectric body further includes, when viewed in the z-axis direction,
a frame portion that constitutes an opening and that comprises, as parts around the opening, a base portion whose x-axis direction is a length direction and an opposing portion that is positioned on a side opposite to the base portion with the opening therebetween,
a retention portion that extends toward an outside of the opening from the opposing portion and that supports the frame portion, and
a supporting portion that is connected to a side of the retention portion opposite to the opposing portion and that is supported by the mounting base body; wherein the at least two driving arms extend from the base portion; and
wherein the detection arm extends from the base portion at a position between the at least two driving arms.

3. The angular velocity sensor according to claim 1 or claim 2, wherein the frame portion is supported at one point by the retention portion.

4. The angular velocity sensor according to any one of claims 1 to 3, wherein the at least two driving arms extend into the opening, and
wherein the detection arm extends into the opening.

5. The angular velocity sensor according to claim 4, wherein the at least two driving arms and the detection arm fully extend into the opening.

6. The angular velocity sensor according to any one of claims 1 to 5, wherein the piezoelectric body includes two units, each unit of the two units comprising the retention portion, the frame portion, the at least two driving arms, and the detection arm, and
wherein the two units face each other on sides thereof at which the retention portion of the each unit extend from the frame portion of the each unit.

7. The angular velocity sensor according to claim 2, wherein the piezoelectric body further includes
a second driving arm that extends in the y-axis direction from the opposing portion, and
a second detection arm that extends in the y-axis direction from the opposing portion, and
wherein the sensor element includes
a plurality of second excitation electrodes that are positioned on the second driving arm in an arrangement in which the second driving arm is excited in the x-axis direction, and
a plurality of second detection electrodes that are positioned on the second detection arm in an arrangement that cancels a signal that is produced by vibration of the second detection arm in the z-axis direction.

8. A sensor element comprising:
a piezoelectric body that includes at least two driving arms and a detection arm, the at least two driving arms extending in a y-axis direction in a row with respect to each other at positions situated away from each other in an x-axis direction in an orthogonal coordinate system xyz, the detection arm extending in the y-axis direction from a base portion;
a plurality of excitation electrodes that are positioned on the at least two driving arms in an arrangement and connection relationship in which the at least two driving arms are excited in phases that are opposite to each other in the x-axis direction;
a plurality of detection electrodes that are positioned on the detection arm in an arrangement that cancels a signal that is produced by vibration of the detection arm in the x-axis direction or in a z-axis direction; and
a plurality of terminals that are connected to the plurality of excitation electrodes and the detection electrodes,
wherein the piezoelectric body further includes, when viewed in the z-axis direction,
a frame portion that constitutes an opening, and that comprises, as parts around the opening, the base portion whose x-axis direction is a length direction, and an opposing portion that is positioned on a side opposite to the base portion with the opening therebetween,
a retention portion that extends toward an outside of the opening from the opposing portion and that supports the frame portion, and
a supporting portion that is connected to a side of the retention portion opposite to the opposing portion, the plurality of terminals being positioned at the supporting portion,
wherein the at least two driving arms extend from portions of the opposing portion on two sides in the x-axis direction with respect to a position at which the opposing portion and the retention portion are connected to each other, and
wherein the detection arm extends from the base portion.

9. A sensor element comprising:
a piezoelectric body that includes at least two driving arms and a detection arm, the at least two driving arms extending in a y-axis direction in a row with respect to each other at positions situated away from each other in an x-axis direction in an orthogonal coordinate system xyz, the detection arm extending in the y-axis direction;
a plurality of excitation electrodes that are positioned on the at least two driving arms in an arrangement and connection relationship in which the at least two driving arms are excited in phases that are opposite to each other in the x-axis direction;
a plurality of detection electrodes that are positioned on the detection arm in an arrangement that cancels a signal that is produced by vibration of the detection arm in the x-axis direction or in a z-axis direction ; and
a plurality of terminals that are connected to the plurality of excitation electrodes and the detection electrodes,
wherein the piezoelectric body further includes, when viewed in the z-axis direction,
a frame portion that constitutes an opening, and that comprises, as parts around the opening, a base portion whose x-axis direction is a length direction, and an opposing portion that is positioned on a side opposite to the base portion with the opening therebetween,
a retention portion that extends toward an outside of the opening from the opposing portion and that supports the frame portion, and
a supporting portion that is connected to a side of the retention portion opposite to the opposing portion, the plurality of terminals being positioned at the supporting portion,
wherein the at least two driving arms extend from the base portion, and
wherein the detection arm extends from the base portion at a position between the at least two driving arms.

10. The sensor element according to claim 8 or claim 9, wherein the frame portion is supported at one point by the retention portion.
